(19) Europäisches Patentamt European Patent Office Office européen des brevets

(11) **EP 3 254 821 A2**

(12) **EUROPÄISCHE PATENTANMELDUNG**

(43) Veröffentlichungstag:
13.12.2017 Patentblatt 2017/50

(51) Int Cl.:
*B29C 45/00* *(2006.01)*

(21) Anmeldenummer: **17173820.6**

(22) Anmeldetag: **14.10.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**13188410.8 / 2 860 008**

(71) Anmelder: **3M Innovative Properties Company Saint Paul, MN 55133-3427 (US)**

(72) Erfinder:
• **Uibel, Krishna**
  **87448 Waltenhofen (DE)**

• **Schädel, Robert**
  **87435 Kempten (DE)**

(74) Vertreter: **Mössner, Brigitte**
  **3M Deutschland GmbH**
  **Office of Intellectual Property Counsel**
  **(PC 072P)**
  **Carl-Schurz-Strasse 1**
  **41453 Neuss (DE)**

Bemerkungen:
Diese Anmeldung ist am 31.05.2017 als Teilanmeldung zu der unter INID-Code 62 erwähnten Anmeldung eingereicht worden.

(54) **DURCH THERMOPLASTISCHE VERARBEITUNG VON POLYMER-BORNITRID-COMPOUNDS HERGESTELLTE BAUTEILE, POLYMER-BORNITRID-COMPOUNDS ZUR HERSTELLUNG SOLCHER BAUTEILE, VERFAHREN ZUR HERSTELLUNG SOLCHER BAUTEILE SOWIE DEREN VERWENDUNG**

(57)     Die Erfindung betrifft ein Verfahren zur Herstellung eines Bauteils mit einer Wandstärke von höchstens 3 mm an zumindest einem Teil des Bauteils, umfassend den Verfahrensschritt des Spritzgießens mittels eines Spritzgusswerkzeugs in einer Spritzgussmaschine unter Verwendung eines Polymer-Bornitrid-Compounds, wobei das Polymer-Bornitrid-Compound einen thermoplastisch verarbeitbaren Polymerwerkstoff und einen wärmeleitenden Füllstoff umfasst, wobei der Füllstoff plättchenförmige hexagonale Bornitrid-Partikel umfasst, und wobei die Einspritzgeschwindigkeit beim Spritzgießen höchstens 160 cm$^3$/s beträgt.

Die Erfindung betrifft weiterhin ein durch ein solches Verfahren hergestelltes Bauteil sowie ein Polymer-Bornitrid-Compound zur Herstellung eines solchen Bauteils.

Die Erfindung betrifft weiterhin die Verwendung eines solchen Bauteils zur Wärmeabfuhr von zu kühlenden Komponenten oder Baugruppen.

EP 3 254 821 A2

**Beschreibung**

Die vorliegende Erfindung betrifft ein durch thermoplastische Verarbeitung eines Polymer-Compounds unter Verwendung von plättchenförmigen hexagonalen Bornitrid-Partikeln hergestelltes Bauteil mit hoher Through-plane-Wärmeleitfähigkeit, ein Polymer-Bornitrid-Compound zur Herstellung solcher Bauteile, ein Verfahren zur Herstellung solcher Bauteile sowie die Verwendung solcher Bauteile zur Wärmeabfuhr.

Thermoplastisch verarbeitbare Kunststoffe werden in vielfältigen Anwendungen eingesetzt. Dabei werden oft die Eigenschaften des Basispolymers durch Compoundierung mit zusätzlichen Komponenten modifiziert und dadurch an die jeweilige Anwendung angepasst.

Als zusätzliche Komponenten für die Compoundierung mit der Polymermatrix können beispielsweise organische, mineralische, keramische, glasige und metallische Füllstoffe eingesetzt werden. Die Füllstoffe können dabei beispielsweise als brockige, sphärische, plättchenförmige oder faserförmige Partikel oder als Partikel mit regelloser Morphologie vorliegen. Die zusätzlichen Komponenten können beispielsweise eingesetzt werden zur Modifizierung der mechanischen oder elektrischen Eigenschaften, des Wärmeausdehnungskoeffizienten oder der Dichte oder zur Erhöhung der Wärmeleitfähigkeit.

Bei der Compoundierung entsteht ein Mischwerkstoff aus Polymeren und den zusätzlichen Komponenten, der typischerweise als Granulat anfällt und in Formgebungsprozessen weiterverarbeitet wird. Die Formgebung zu Bauteilen erfolgt bevorzugt im Spritzguss.

Zur Herstellung von wärmeleitfähigen Mischwerkstoffen auf Polymerbasis werden wärmeleitfähige Füllstoffe in die meist nur wenig wärmeleitfähige thermoplastische Matrix eingebracht. Hexagonales Bornitrid ist ein hoch wärmeleitfähiger Füllstoff mit plättchenförmiger Partikelmorphologie, der zur Herstellung von wärmeleitfähigen Polymer-Bornitrid-Mischwerkstoffen (Polymer-Bornitrid-Compounds) eingesetzt werden kann.

Bei der Compoundierung von thermoplastisch verarbeitbaren Polymeren mit Füllstoffen werden in der Regel Extruder verwendet. Es kommen beispielsweise Doppelschneckenextruder zum Einsatz, wobei die Schnecken neben der Materialförderung weitere Aufgaben übernehmen. Es können abhängig von der jeweiligen Anwendung in verschiedenen Zonen im Extruder Förderelemente, Mischelemente, Scherelemente, wie beispielsweise Knetblöcke, und Rückstauelemente in unterschiedlichen Ausführungsformen eingesetzt werden. Mischelemente und Scherelemente sorgen für eine gute Durchmischung und Homogenisierung von Polymerschmelze und Füllstoff.

Füllstoffe können mit dem Polymer über den Haupttrichter oder auch über Seitendosierungen zugeführt werden. Die Zugabe des Füllstoffs über Seitendosierer ist dann besonders wichtig, wenn der Füllstoff scherempfindlich ist. Das Polymergranulat wird über die Hauptdosierung in die Einzugszone des Extruders dosiert und im weiteren Verlauf unter hohem Druck und starker Scherung aufgeschmolzen. Der scherempfindliche Füllstoff wird über eine Seitendosierung dem bereits aufgeschmolzenen Polymer zugeführt. So werden beispielsweise Glasfasern, die als Füllstoffe zur mechanische Verstärkung eingesetzt werden können, unter möglichst geringer Scherung in einer Seitendosierung zu einem späten Zeitpunkt des Compoundierprozesses zugeführt.

Weniger scherempfindliche Füllstoffe können über weitere Seitendosierungen bereits zu einem früheren Zeitpunkt in weiteren Seitendosierungen oder in der Hauptdosierung zusammen mit dem Polymer zugeführt werden. Wenig scherempfindliche Füllstoffe, oder Füllstoffe, die sehr gut homogenisiert werden müssen, wie beispielsweise Pigmente, verbleiben länger im Extruder und durchlaufen von der Position ihrer Zudosierung an alle noch folgenden Homogenisier- und Scherbereiche im Extruder.

Bei scherempfindlichen Füllstoffen kann abhängig von den gewählten Compoundierparametern, wie beispielsweise der Schneckendrehzahl und der Temperatur, eine Degradation bzw. eine teilweise Degradation des Füllstoffs stattfinden. Im Falle der Glasfasern bedeutet eine Degradation eine Zerkleinerung der Glasfasern und damit verbunden eine Verschlechterung der mechanischen Eigenschaften von Spritzgussteilen aus dem Glasfaser-Compound.

Das Compound tritt am Ende des Extruders als Polymerschmelze durch Düsen in Form von Strängen aus dem Extruder aus. Nach dem Abkühlen und Erstarren des Strangs wird über einen Granulator ein Compoundgranulat erzeugt, was für die weitere Verarbeitung in Formgebungsprozessen vorgesehen ist.

Ein möglicher Formgebungsprozess für ungefülltes Polymergranulat und auch für Compoundgranulat aus Polymeren und Füllstoffen ist der Spritzguss. Das Polymergranulat oder das Compoundgranulat wird in der Spritzgussmaschine erneut aufgeschmolzen und unter hohem Druck in eine Form gefüllt. Dort erstarrt die Polymer- bzw. Compoundschmelze und das spritzgegossene Bauteil kann ausgeworfen werden.

Beim Spritzguss besteht eine große Designfreiheit in der Formgebung, wobei komplexe Bauteile spritzgegossen werden können, die zahlreiche Funktionen übernehmen können. Die Polymere werden durch den Einsatz von Füllstoffen den jeweiligen Aufgaben und Funktionen, die sie erfüllen sollen, angepasst.

Beim Einsatz von Glasfasern in Compounds können mechanisch hochbelastbare Kunststoffbauteile hergestellt werden. Die Zugfestigkeit des fertigen Spritzgussteils ist in der Richtung am höchsten, in der während der Formgebung die Polymerschmelze das Formgebungswerkzeug gefüllt hat. Die Glasfasern werden während des Spritzgussvorgangs stark orientiert. Durch diese Orientierung sind die Werkstoffeigenschaften, beispielsweise die mechanischen Eigenschaften, im spritzgegossenen Bauteil anisotrop.

Es hat sich gezeigt, dass bei der Herstellung von wärmeleitfähigen Polymer-Bornitrid-Compounds und deren Verarbeitung zu Bauteilen viele Einflussfaktoren eine entscheidende Auswirkung auf das Ergebnis der Wärmeleitfähigkeit haben. Zu diesen Einflussfaktoren gehören die Compoundierung, die Formgebung, die Probengeometrie, die Probennahme und die angewendete Messmethode.

Bei der Compoundierung können beispielsweise Ko-Kneter-Anlagen (Buss Kneter), Einschneckenextruder und Doppelschneckenextruder eingesetzt werden. Dabei kann über die Anlagenauslegung und/oder über die Prozessparameter eine schroffe oder schonende Compoundierung eingestellt werden. Zur Einstellung einer schrofferen Compoundierung können sowohl Dispergier- und Scherelemente wie beispielsweise Knetblöcke eingesetzt werden, zur Einstellung einer schonenderen Compoundierung kann beispielsweise auf Knetblöcke ganz verzichtet werden. Eine höhere Schneckendrehzahl führt zu einer vergleichsweise stärkeren Scherung des Compounds und des Füllstoffs im Compound, während eine niedrigere Schneckendrehzahl zu einer vergleichsweise schwächeren Scherung des Compounds und des Füllstoffs im Compound führt.

Bei der Compoundierung von Polymeren mit Bornitrid-Pulvern, beispielsweise mit sprühgetrocknetem Bornitrid-Pulver, zu Polymer-Bornitrid-Compounds hat sich gezeigt, dass bei Zusatz von 30 Vol.-% Bornitrid zu Polyamid (PA 6) eine schroffe Compoundierung mit starker Durchmischung und Scherung und guter Dispergierung des Füllstoffs zu vergleichsweise guten mechanischen Eigenschaften des Compounds führt, während die Wärmeleitfähigkeit vergleichsweise geringer ist. Umgekehrt führt eine schonende Compoundierung mit geringerer Scherung und schlechterer Dispergierung zu Compounds mit vergleichsweise besserer Wärmeleitfähigkeit und schlechteren mechanischen Eigenschaften.

Auch die anschließende Formgebung hat einen Einfluss auf das Ergebnis der Wärmeleitfähigkeit. Werden aus dem mit schroffer Compoundierung hergestellten Polymer-Bornitrid-Compound Proben über Warmpressen hergestellt, so liegt die Through-plane-Wärmeleitfähigkeit um 40 % höher als bei aus demselben Polymer-Bornitrid-Compound über Spritzguss hergestellten Zugprüfstäben. Die Werte für die Through-plane-Wärmeleitfähigkeit der warmgepressten Proben liegen um bis zu 100 % höher als bei Messungen an 2 mm dünnen spritzgegossenen Platten. Werden aus dem mit schonender Compoundierung hergestellten Polymer-Bornitrid-Compound dünne Platten einer Stärke von 2 mm über Spritzguss hergestellt, so liegt die Through-plane-Wärmeleitfähigkeit um bis zu 15 % höher als bei den spritzgegossenen 2 mm-Platten aus dem Compound mit der schroffen Compoundierung.

Weiterhin hat auch die Probengeometrie einen Einfluss auf das Ergebnis der Wärmeleitfähigkeit. Die am spritzgegossenen Zugstab einer Dicke von 4 mm gemessene Through-plane-Wärmeleitfähigkeit liegt um bis zu 50 % höher als die an der spritzgegossenen 2 mm dicken Platte gemessene Through-plane-Wärmeleitfähigkeit.

Beim Spritzgießen hat weiterhin die Art der Probennahme einen Einfluss auf das Ergebnis der Wärmeleitfähigkeit. So hat sich beispielsweise gezeigt, das bei schroffer Compoundierung und Spritzguss von 2 mm dünnen Platten die Wärmeleitfähigkeit angussnah, in Probenmitte und angussfern stark unterschiedlich sein kann. So kann die Wärmeleitfähigkeit bei hochgefüllten Compounds je nach Position der Probennahme um bis zu 20 % voneinander abweichen. Bei schroffer Compoundierung und Spritzguss von Zugprüfstäben kann die Wärmeleitfähigkeit einer angussnahen, direkt nach der ersten Probenschulter genommenen Probe um bis zu 10 % von einer angussfern, vor der zweiten Probenschulter genommenen Probe abweichen.

Schließlich hat auch die Messmethode einen Einfluss auf das Ergebnis der Through-plane-Wärmeleitfähigkeit. Wird die Through-plane-Wärmeleitfähigkeit mit der Hotdiskmethode an 4 mm dicken spritzgegossenen Platten gemessen, so ist das Messergebnis bei isotropen Füllstoffen um ca. 15 - 20 % höher als bei Messung mit der Laser-Flash-Methode an 2 mm dünnen spritzgegossenen Platten, während bei plättchenförmigen Füllstoffen mit der Hotdiskmethode eine mehr als 50 % höhere Wärmeleitfähigkeit gemessen wird.

Aus diesen Gründen können Ergebnisse aus Wärmeleitfähigkeitsmessungen nur miteinander verglichen werden, wenn die Herstellung des Compounds, die Formgebung des Compoundgranulats, die Probennahme und die Wärmeleitfähigkeitsmessung unter identischen Bedingungen erfolgen.

Hexagonale Bornitrid-Pulverpartikel, die als Primärpartikel und nicht als Agglomerate von Primärpartikeln vorliegen, sind in ihrer Wärmeleitfähigkeit anisotrop. Gut kristallines Bornitrid-Pulver hat eine plättchenförmige Partikelmorphologie. Die Bornitrid-Plättchen weisen typischerweise ein AspektVerhältnis, d.h. ein Verhältnis Plättchendurchmesser zu Plättchendicke, von > 10 auf. Die Wärmeleitfähigkeit durch das Plättchen ist im Verhältnis zur Wärmeleitfähigkeit in Plättchenebene gering.

Werden Compounds aus einem thermoplastischen Polymer und Bornitrid-Pulver in Form von plättchenförmigen Bornitrid-Primärpartikeln hergestellt, liegen Bornitrid-Primärpartikel vorwiegend fein dispergiert vor. Wird ein solcher Compound spritzgegossen, richten sich insbesondere bei dünnwandigen Bauteilen plättchenförmige Bornitrid-Primärpartikel zu einem Großteil planparallel zur Oberfläche des Spritzgusswerkzeugs und planparallel zur Bauteiloberfläche aus. Die Ausrichtung der plättchenförmigen Bornitrid-Primärpartikel erfolgt aufgrund eines Schergefälles im Spritzgussbauteil zwischen werkzeugwandnahen und werkzeugwandferneren Bereichen. Die Ausrichtung der plättchenförmigen Bornitrid-Primärpartikel im spritzgegossenen Bauteil führt zu einer Anisotropie der Eigenschaften, insbesondere der Wärmeleitfähigkeit. Dabei liegt die Wärmeleitfähigkeit bei dünnwandigen Bauteilen einer Wandstärke von $\leq 3$ bzw. $\leq 2$ mm in Fließrichtung des Polymer-Compounds (in-plane) in der Regel bei mehr als dem vierfachen und bis zum siebenfachen und mehr der Wärmeleitfähigkeit durch die Bauteilwand (through-plane), bei Füllgraden von $\geq 30$ Vol.-%. Die Anisotropie in der Wärmeleitfähigkeit von thermoplastischen spritzgegossenen Bauteilen ist bei vielen Anwendungen von Nachteil. So ist beispielsweise die Abfuhr von Wärme durch eine Gehäusewand bei geringer Through-plane-Wärmeleitfähigkeit ebenfalls gering. In Anwendungen, in denen spritzgegossene Gehäuse eingesetzt werden, ist diese Eigenschaft von Nachteil, da zwar eine schnelle Verteilung der Wärme in der Gehäusewand gelingt, aber nicht die Abfuhr der Wärme durch die Gehäusewand. Eine möglichst hohe Through-plane-Wärmeleitfähigkeit ist für diese Anwendungen wünschenswert, insbesondere, wenn die Wärme flächig abgeführt werden soll.

Bei Füllgraden unter 50 Vol.-% Bornitrid-Pulver im Compound wird in der Regel ein Wert von 1 W/m*K für die Through-plane-Wärmeleitfähigkeit bei spritzgegossenen dünnwandigen Bauteilen mit Wandstärken von 2 mm und darunter nicht überschritten.

Bornitrid kann auch in Form von Agglomeraten von plättchenförmigen Primärpartikeln als wärmeleitender Füllstoff in Polymeren eingesetzt werden. Verschiedene Verfahren zur Herstellung von Bornitrid-Agglomeraten, beispielsweise mittels Sprühtrocknen, isostatischem Pressen oder Pressen und anschließendem Sintern sind beschreiben in der US 2006/0 127 422 A1, WO 03/013 845 A1, US 6,048,511, EP 0 939 066 A1, US 2002/0 006 373 A1, US 2004/0 208 812 A1, WO 2005/021 428 A1, US 5,854, 155 und US 6,096,671.

In der DE 10 2010 050 900 A1 wird ein Verfahren zur Herstellung texturierter Bornitrid-Agglomerate beschrieben, bei denen die Bornitrid-Plättchen im Agglomerat eine Vorzugsorientierung aufweisen.

Die Herstellung von thermoplastischen Polymer-Compounds erfolgt beispielsweise durch Spritzgießen in einer Spritzgussmaschine. Dabei wird ein Compoundgranulat in die Spritzgussmaschine gefüllt, aufgeschmolzen und unter hohem Druck in die Spritzgussform gefüllt. Typische Spritzgussparameter liegen beispielsweise bei einem niedrigviskosen Polyamid 6 (z. B. Schulamid 6 NV12, A. Schulman, Kerpen, Deutschland) ohne Füllstoffe bei einer Massetemperatur der Compoundschmelze von 250 - 270 °C, einer Werkzeugtemperatur des Spritzgusswerkzeugs von 60 - 90 °C und einer Einspritzgeschwindigkeit von 200 cm$^3$/s.

Thermoplastische Polymere haben eine sehr niedrige Wärmeleitfähigkeit von typischerweise < 0,3 W/m*K. Thermoplastische Compounds mit Zusatz von Glasfasern oder anderen wenig wärmeleitfähigen Füllstoffen besitzen meist ebenfalls eine niedrige bzw. kaum höhere Wärmeleitfähigkeit. Da die Erstarrung einer Polymerschmelze mit niedriger Wärmeleitfähigkeit während der Formfüllung nur langsam beginnt und nach kompletter Formfüllung andauert, werden zur Verkürzung der Zykluszeiten für eine wirtschaftliche Fertigung niedrige Formtemperaturen im Spritzguss verwendet. Die niedrigen Formtemperaturen werden üblicherweise in Kombination mit hohen Einspritzgeschwindigkeiten verwendet, um Fehler im Bauteil zu verhindern und lange Fließwege zu erzielen. Durch die niedrige Formtemperatur beim Spritzguss bilden sich bei niedrig wärmeleitfähigen glasfaserhaltigen Compounds während der Formfüllung wandnahe Bereiche mit Faserorientierung in Fließrichtung stärker aus, wodurch höhere Zugfestigkeiten erzielt werden.

Für eine Optimierung von Spritzgussparametern von Compounds mit sehr niedriger Wärmeleitfähigkeit werden üblicherweise bevorzugt Parameter gewählt, die nicht zu einer Verlängerung der Zykluszeiten führen. Gibt es beispielsweise Probleme bei der Formfüllung oder bei der Qualität des Spritzgussteils, so werden bevorzugt die Einspritzgeschwindigkeit, der Einspritzdruck und die Massetemperatur der Compoundschmelze erhöht und die Werkzeugtemperatur des Spritzgusswerkzeugs bei niedrigen Werten belassen. So können mit geringen Zykluszeiten Spritzgussteile hoher Qualität gefertigt werden.

Werden mit diesen Standard-Spritzgussparametern (hohe Einspritzgeschwindigkeit, hohe Massetemperatur, niedrige Formtemperatur) mittel- und hochwärmeleitfähige Polymer-Bornitrid-Compounds enthaltend Bornitrid-Agglomerate verarbeitet, so entstehen Bauteile mit vergleichsweise niedrigen Wärmeleitfähigkeiten, insbesondere niedrigen Through-plane-Wärmeleitfähigkeiten. Bei glasfaserhaltigen mittel- und hochwärmeleitfähigen Polymer-Bornitrid-Compounds werden mit Standard-Spritzgussparametern vergleichsweise niedrige Festigkeiten erzielt. Als mittelwärmeleitfähig wird dabei eine Through-plane-Wärmeleitfähigkeit von 1 bis < 2,5 W/m*K und als hochwärmeleitfähig eine Through-plane-Wärmeleitfähigkeit von $\geq 2,5$ W/m*K bezeichnet.

Hohe Einspritzgeschwindigkeiten von mehr als 160 cm$^3$/s führen bei Polymer-Bornitrid-Compounds mit Bornitrid-Agglomeraten zu einer starken Scherung der Bornitrid-Agglomerate und somit zu einer Degradation der Bornitrid-Agglomerate zu Agglomeratfragmenten oder bis zu Bornitrid-Primärpartikeln in der Compoundmatrix. Dadurch wird die Wärmeleitfähigkeit von spritzgegossenen Bauteilen in allen Raumrichtungen herabgesetzt. Auch Glasfasern werden bei hochgefüllten mittel- bis hochwärmeleitfähigen Compounds bei hohen Einspritzgeschwindigkeiten stark geschert und geschädigt. Insbesondere von Nachteil sind auch die eingesetzten niedrigen Werkzeugtemperaturen des Spritzgusswerkzeugs, die ebenfalls zur Degradation der scherempfindlichen Füllstoffe führen. Oft können in Spritzgussanlagen Werkzeugtemperaturen von oberhalb 150°C nicht erzielt werden. Zudem können die tatsächlich erreichten Werkzeugtemperaturen deutlich niedriger als die eingestellten Soll-Temperaturen sein. Für eine Prüfung der Werkzeugtemperatur ist daher eine Messung auf der Werkzeugoberfläche erforderlich, die während der Werkzeugfüllung im Kontakt mit dem Polymer oder dem Polymercompound steht.

Beim Spritzguss von mittel- und insbesondere von hochwärmeleitfähigen Compounds führt der Einsatz von Standard-Spritzgussparametern zu einer deutlichen Ausbildung von Fließlinien auf Bauteiloberflächen. Dies liegt insbesondere an einem Kernfluss ("fontain flow"), der Polymerschmelze immer wieder aufs Neue aus dem Kernbereich des Gussteils an die Oberfläche fördert. Beim Spritzguss von mittel- und insbesondere bei hochwärmeleitfähigen Compounds unter Verwendung von üblichen Werkzeugtemperaturen erstarrt das Polymercompound schlagartig, so dass die Frequenz der Ausbildung von Fließlinien hoch ist. In einigen Fällen konnte beobachtet werden, dass bereits erstarrte Oberflächenfragmente aufgefaltet in das Bauteil ragen. Treffen zwei bereits erstarrte Oberflächenfragmente aufeinander, kann es passieren, dass sie sich auch bei hohem Spritzdruck und hohem Nachdruck nicht mehr verbinden. Dies führt zu schlechten mechanischen Eigenschaften und einer schlechten Oberflächenqualität des Spritzgussteils.

Der Erfindung liegt daher die Aufgabe zugrunde, unter Überwindung der Nachteile des Standes der Technik, thermoplastisch verarbeitbare Polymer-Bornitrid-Compounds zur Verfügung zu stellen, mit denen prozesssicher hohe Through-plane-Wärmeleitfähigkeitswerte sowie hohe In-plane-Wärmeleitfähigkeitswerte in dünnwandigen Bauteilen erhalten werden können.

Die oben genannte Aufgabe wird gelöst durch das Verfahren gemäß Anspruch 1, das Bauteil gemäß den Ansprüchen 10 und 11, das Polymer-Bornitrid-Compound gemäß Anspruch 25 und die Verwendung des Bauteils gemäß Anspruch 26. Bevorzugte bzw. besonders zweckmäßige Ausführungsformen des Verfahrens und des Bauteils sind in den Unteransprüchen 2 bis 9 und 12 bis 24 angegeben.

Gegenstand der Erfindung ist somit ein Verfahren zur Herstellung eines Bauteils mit einer Wandstärke von höchstens 3 mm an zumindest einem Teil des Bauteils, umfassend den Verfahrensschritt des Spritzgießens mittels eines Spritzgusswerkzeugs in einer Spritzgussmaschine unter Verwendung eines Polymer-Bornitrid-Compounds, wobei das Polymer-Bornitrid-Compound einen thermoplastisch verarbeitbaren Polymerwerkstoff und einen wärmeleitenden Füllstoff umfasst, wobei der Füllstoff plättchenförmige hexagonale Bornitrid-Partikel umfasst, und wobei die Einspritzgeschwindigkeit beim Spritzgießen höchstens 160 cm$^3$/s beträgt.

Gegenstand der Erfindung ist weiterhin ein Bauteil mit einer Wandstärke von höchstens 3 mm an zumindest einem Teil des Bauteils, erhältlich durch ein solches Verfahren.

Gegenstand der Erfindung ist weiterhin ein Bauteil mit einer Wandstärke von höchstens 3 mm an zumindest einem Teil des Bauteils, wobei das Bauteil durch thermoplastische Verarbeitung eines Polymer-Bornitrid-Compounds hergestellt wird, und wobei das Bauteil einen thermoplastisch verarbeitbaren Polymerwerkstoff und einen wärmeleitenden Füllstoff umfasst, wobei der Füllstoff plättchenförmige hexagonale Bornitrid-Partikel umfasst.

Gegenstand der Erfindung ist weiterhin ein Polymer-Bornitrid-Compound zur Herstellung eines solchen Bauteils, wobei das Polymer-Bornitrid-Compound einen thermoplastisch verarbeitbaren Polymerwerkstoff und einen wärmeleitenden Füllstoff umfasst, wobei der Füllstoff plättchenförmige hexagonale Bornitrid-Partikel umfasst.

Gegenstand der Erfindung ist weiterhin die Verwendung eines solchen Bauteils zur Wärmeabfuhr von zu kühlenden Komponenten oder Baugruppen, vorzugsweise von elektronischen Komponenten oder Baugruppen.

Durch die erfindungsgemäßen Polymer-Bornitrid-Compounds kann der Nachteil der niedrigen Through-plane-Wärmeleitfähigkeit von spritzgegossenen dünnwandigen Bauteilen aus Polymer-Bornitrid-Compounds überwunden werden.

Die Through-Plane-Wärmeleitfähigkeit ist die in der Through-Plane-Richtung, also senkrecht zur Plattenebene, gemessene Wärmeleitfähigkeit. Die In-Plane-Wärmeleitfähigkeit ist die in In-Plane-Richtung, also in der Plattenebene, gemessene Wärmeleitfähigkeit.

Es hat sich überraschenderweise gezeigt, dass durch die erfindungsgemäßen Polymer-Bornitrid-Compounds die Through-plane-Wärmeleitfähigkeit von spritzgegossenen dünnwandigen Bauteilen signifikant erhöht werden kann, bei gleichzeitig guter In-plane-Wärmeleitfähigkeit.

Weiterhin ist überraschend, dass zur Herstellung der erfindungsgemäßen Bauteile Polymer-Bornitrid-Compounds mit nicht zu hohen Füllgraden an wärmeleitenden Füllstoffen eingesetzt werden können. Es ist daher möglich, zur weiteren Eigenschaftsanpassung der gefüllten Polymerwerkstoffe weitere Additive und Füllstoffe zuzusetzen, beispielsweise Glasfasern zur Erhöhung der mechanischen Stabilität, so dass bei den meisten gängigen thermoplastischen Polymeren Gesamtfüllgrade von $\leq$ 50 Vol.-% und für TPE-Polymere (thermoplastische Elastomere) von $\leq$ 70 Vol.-% möglich sind.

Mit dem erfindungsgemäßen Herstellverfahren können deutlich höhere Through-plane-Wärmeleitfähigkeiten bei mit Polymer-Bornitrid-Compounds spritzgegossenen dünnwandigen Bauteilen erzielt werden als bei mit Standard-Spritzgussparametern hergestellten Bauteilen, wobei gleichzeitig die Ausprägung von Fließlinien deutlich verringert ist und eine nahezu fehlerfreie Oberfläche ausgebildet wird.

Weiterhin überraschend ist, dass Spritzgussparameter gefunden wurden, die bei Verwendung von glasfaserhaltigen, wärmeleitfähigen Compounds zu einer Verbesserung der mechanischen Eigenschaften führen. Das erfindungsgemäße Herstellverfahren ermöglicht eine Verringerung der Glasfaserscherung sowie eine vorteilhafte Orientierung der Glasfasern in Fließrichtung. Mit dem erfindungsgemäßen Herstellverfahren konnte die Zugfestigkeit von spritzgegossenen Proben um bis zu 15 % und mehr gesteigert werden, im Vergleich zu mit Standard-Spritzgussparametern hergestellten Proben.

Beim thermoplastischen Spritzguss findet während der Formfüllung eine Ausbildung von Schichten innerhalb des Spritzgussteils statt. Typischerweise gibt es eine Randschicht, die bereits während der Formfüllung erstarrt, so dass die Schmelze nicht über die gesamte Fließfront die Form füllt. Vielmehr fließt die Schmelze zwischen den erstarrten Randzonen bis zur Fließfront durch. Zudem gibt es ein Schergefälle zwischen wandnahen und wandferneren Bereichen, wobei die Scherung im wandnahen noch nicht erstarrten Bereich am höchsten ist. Hier fließt die Schmelze langsamer in die Form als im Kernbereich. Durch das Schergefälle in wandnahen Bereichen werden anisotrope Füllstoffe, wie beispielsweise Fasern oder Plättchen während der Formfüllung parallel zur Wandfläche orientiert. Innerhalb des wandnahen Schergefälles richten sich Glasfasern parallel zur Fließrichtung aus. Plättchenförmige Bornitrid-Partikel richten sich planparallel zur Wandfläche aus. Neben den wandnahen Bereichen existiert ein Kernbereich, der mittig zwischen den wandnahen Bereichen liegt. Im Kernbereich werden Fasern und Plättchen quer zur Hauptfließrichtung orientiert.

Die Ausprägung der jeweiligen Schichten und der Grad der Orientierung in den jeweiligen Schichten beeinflusst die Anisotropie der Bauteileigenschaften bezüglich Wärmeleitfähigkeit und Festigkeit. So führt bei identischen, plättchenförmige Bornitrid-Partikel enthaltenden Polymer-Bornitrid-Compounds ein stark ausgeprägter Kernbereich zu einer hohen Through-plane-Wärmeleitfähigkeit und einer verhältnismäßig niedrigen In-plane-Wärmeleitfähigkeit. Gleichzeitig ist bei Glasfasern enthaltenden Polymer-Bornitrid-Compounds die Festigkeit verhältnismäßig niedriger als bei weniger stark ausgeprägtem Kernbereich. Umgekehrt führen stark ausgeprägte Randbereiche mit Längsorientierung der Fasern parallel zur Hauptfließrichtung oder bei plättchenförmigen wärmeleitfähigen Partikeln planparallel zur Wandfläche zu einer verhältnismäßig hohen Zugfestigkeit in Hauptfließrichtung und zu einer verhältnismäßig hohen In-plane-Wärmeleitfähigkeit. Beide Effekte, die hohe In-plane-Wärmeleitfähigkeit und die hohe Zugfestigkeit, können bei Compounds mit plättchenförmigen, wärmeleitfähigen Partikeln in Kombination mit Glasfasern gleichzeitig auftreten.

Bei den erfindungsgemäßen Bauteilen aus Polymer-Bornitrid-Compounds mit plättchenförmigen Bornitrid-Partikeln hat sich gezeigt, dass die Dicke der Mittelschicht überraschenderweise nicht mit steigender Einspritzgeschwindigkeit zunimmt, sondern abnimmt. Umgekehrt führen niedrige Einspritzgeschwindigkeiten zur Ausprägung dicker Mittelschichten. In den erfindungsgemäßen Bauteilen können so durch niedrige Einspritzgeschwindigkeiten dicke Mittelschichten erzeugt werden, die zu einer vergleichsweise erhöhten Through-plane-Wärmeleitfähigkeit führen.

Überraschenderweise hat sich bei den erfindungsgemäßen Bauteilen aus Polymer-Bornitrid-Compounds gezeigt, dass die Dicke der Mittelschicht bei Erhöhung der Werkzeugtemperatur des Spritzgusswerkzeugs nicht zunimmt, was der Fachmann erwartet hätte, sondern dass die Dicke der Mittelschicht abnimmt. Entgegen der Erwartung nimmt die Dicke der Mittelschicht zu bei Erniedrigung der Werkzeugtemperatur. Somit konnte bei vergleichsweise niedrigen Werkzeugtemperaturen eine deutliche Erhöhung der Through-plane-Wärmeleitfähigkeit festgestellt werden.

Weiterhin hat sich überraschenderweise gezeigt, dass bei glasfaserhaltigen Polymer-Bornitrid-Compounds und Verwendung von mittleren Einspritzgeschwindigkeiten von etwa 90 cm$^3$/s und hohen Werkzeugtemperaturen hohe Festigkeiten erzielt werden können. Dies ist überraschend, da zu erwarten gewesen wäre, dass bei hohen Werkzeugtemperaturen die Mittelschicht stärker ausgeprägt ist und somit die Zugfestigkeit absinkt.

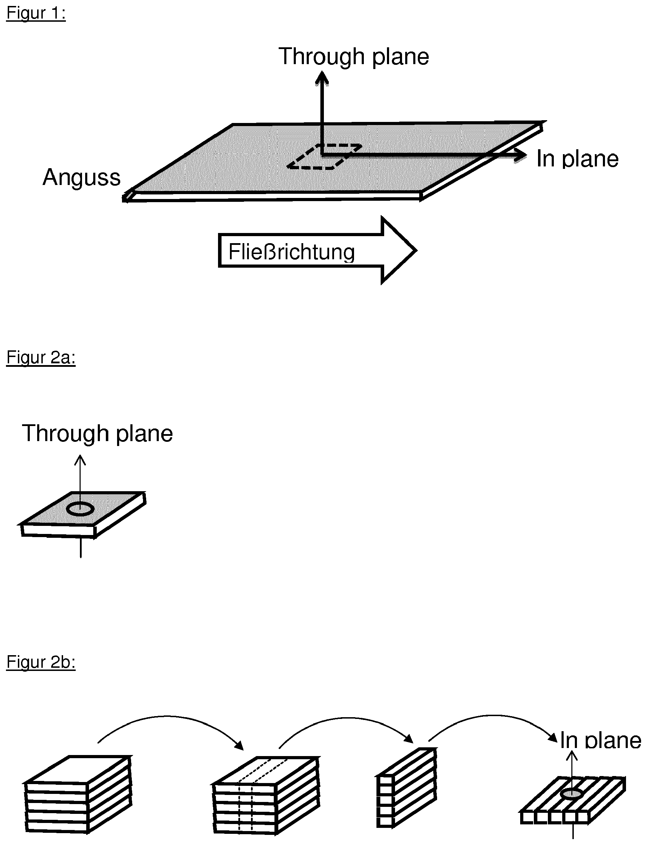

Figur 1 zeigt eine dünne spritzgegossene Platte mit den Abmessungen 80x80x2 mm$^3$ mit Anguss und den Richtungen In-plane und Through-plane, in denen die Wärmeleitfähigkeitswerte (In-plane-Wärmeleitfähigkeit und Through-plane-Wärmeleitfähigkeit) ermittelt werden.

Figuren 2 a und b zeigen die zur Messung der Through-plane- und In-plane-Wärmeleitfähigkeit verwendeten Proben. Figur 2 a zeigt eine Probe mit den Abmessungen 10x10x2 mm$^3$, die aus der Mitte der spritzgegossenen Platte von Figur 1 präpariert wurde und die zur Messung der Through-plane-Wärmeleitfähigkeit verwendet wird. Figur 2 b zeigt die Präparation einer Probe zur Messung der In-plane-Wärmeleitfähigkeit. Zunächst wird ein Plattenstapel von Proben der Abmessungen 10x10x2 mm$^3$ durch Verkleben mit Sekundenkleber hergestellt, wobei diese Proben aus spritzgegossenen Platten der Abmessungen 80x80x2 mm$^3$ präpariert wurden. Aus dem Plattenstapel wird eine Probe parallel zur Through-plane-Richtung und senkrecht zur Fließrichtung der spritzgegossenen Platten präpariert. An dieser Probe wird die In-Plane Wärmeleitfähigkeit ermittelt.

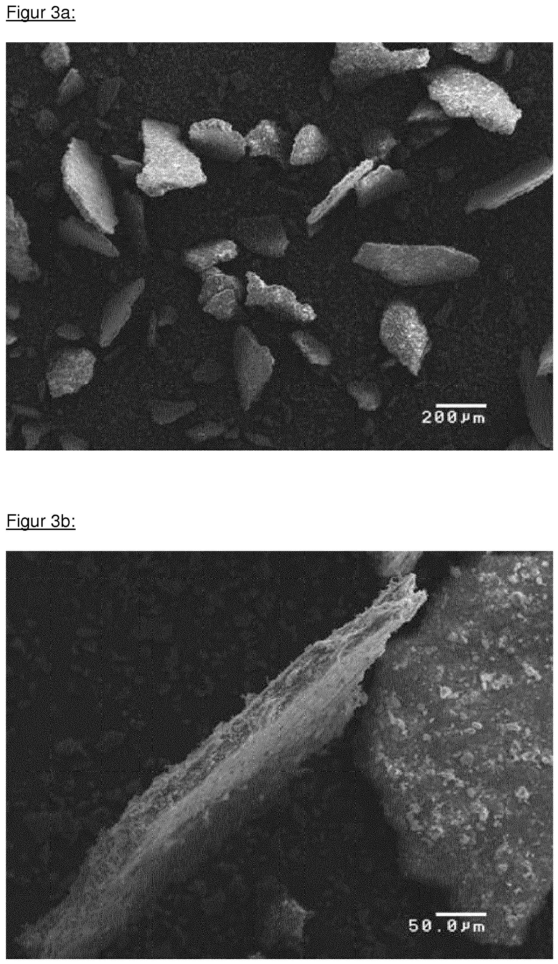

Figuren 3 a und b zeigen REM-Aufnahmen der für die erfindungsgemäßen Bauteile und Polymer-Bornitrid-Compounds eingesetzten Bornitrid-Agglomerate aus den Beispielen und Referenzbeispielen. Figur 3 a zeigt eine Übersichtsaufnahme der Bornitrid-Agglomerate in der Siebfraktion < 500 μm. Figur 3 b zeigt eine Bruchfläche eines Agglomerats mit einer Dicke von 30 μm.

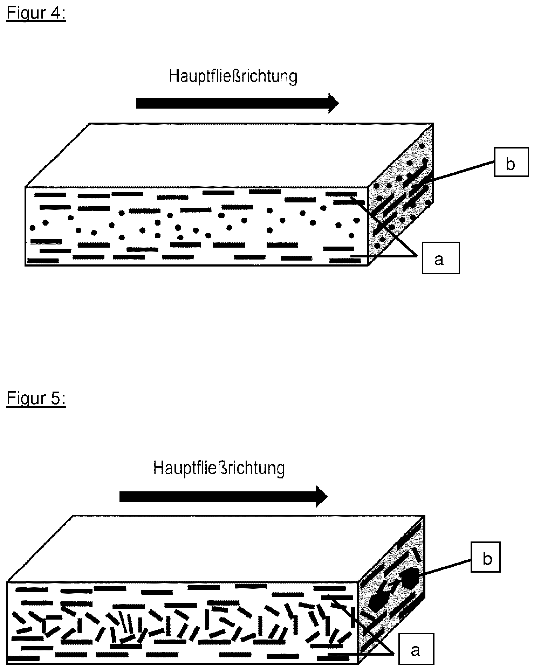

Figur 4 zeigt das Dreischichtmodell einer spritzgegossenen dünnen Platte aus einem Polymer-Bornitrid-Compound enthaltend faserförmige Füllstoffe, wie beispielsweise Glasfasern. In den beiden wandnahen Schichten (a) sind die Fasern parallel zur Hauptfließrichtung ausgerichtet. Bei einer starken Ausprägung dieser wandnahen Schichten können hohe Zugfestigkeiten in Fließrichtung erzielt werden. In der Mittelschicht (b) sind die Fasern quer zur Hauptfließrichtung orientiert. Die Mittelschicht trägt wenig zur Festigkeit der Probe in Fließrichtung bei.

Figur 5 zeigt das Dreischichtmodell einer spritzgegossenen dünnen Platte aus einem Compound enthaltend plättchenförmige, hoch wärmeleitfähige Füllstoffe wie beispielsweise texturierte schuppenförmige Bornitrid-Agglomerate. In den beiden wandnahen Schichten (a) sind die Plättchen parallel zur Hauptfließrichtung und planparallel zur Bauteiloberfläche ausgerichtet. Sind diese Schichten stark ausgeprägt, kann eine hohe In-plane Wärmeleitfähigkeit erzielt werden. In der Mittelschicht (b) sind die plättchenförmigen Füllstoffpartikel senkrecht zur Hauptfließrichtung orientiert. Bei einer starken Ausprägung der Mittelschicht können hohe Through-plane Wärmeleitfähigkeiten erzielt werden.

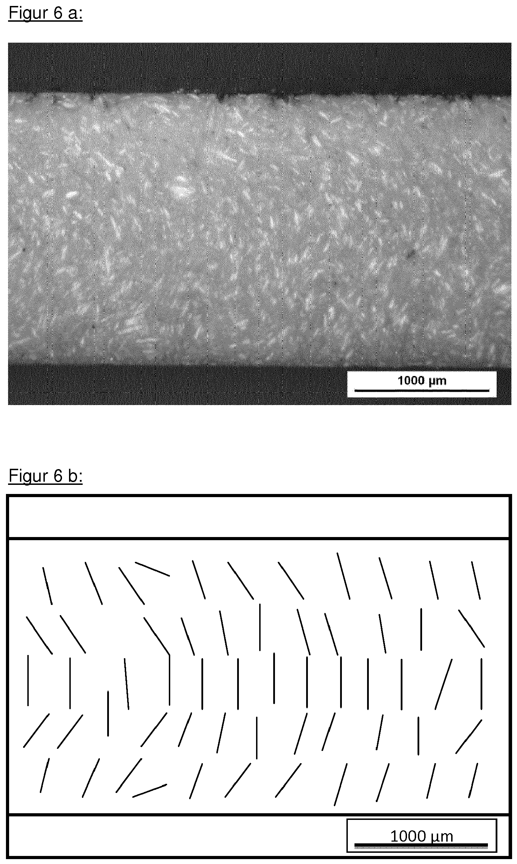

Figur 6 a zeigt eine lichtmikroskopische Aufnahme eines Querschliffes einer 2 mm dünnen spritzgegossenen Platte aus Beispiel Nr. 8. Die Hauptfließrichtung des Polymercompounds während der Füllung des Spritzgusswerkzeugs ist von links nach rechts. Ein Großteil der schuppenfömigen Bornitrid-Agglomerate im Kernbereich der Probe ist im Wesentlichen senkrecht zur Plattenoberfläche und senkrecht zur Hauptfließrichtung orientiert. Der Kernbereich mit dieser Anordnung der schuppenförmigen Bornitrid-Agglomerate ist sehr groß und geht teils bis an die Bauteiloberfläche. Der Kernbereich macht mehr als 70 % des Bauteilvolumens aus. In der Gesamtprobe sind mehr als 70 % der schuppenförmigen Bornitrid-Agglomerate mit einem Winkel von wenigstens 45° zur Bauteiloberfläche orientiert. Die 50 Vol.-% schuppenförmige Bornitrid-Agglomerate enthaltende PA6-Probe hat eine Through-plane Wärmeleitfähigkeit von 4,1 W/m*K.

Figur 6 b ist eine Schemazeichnung der Orientierungen der schuppenförmigen Bornitrid-Agglomerate aus Figur 6 a.

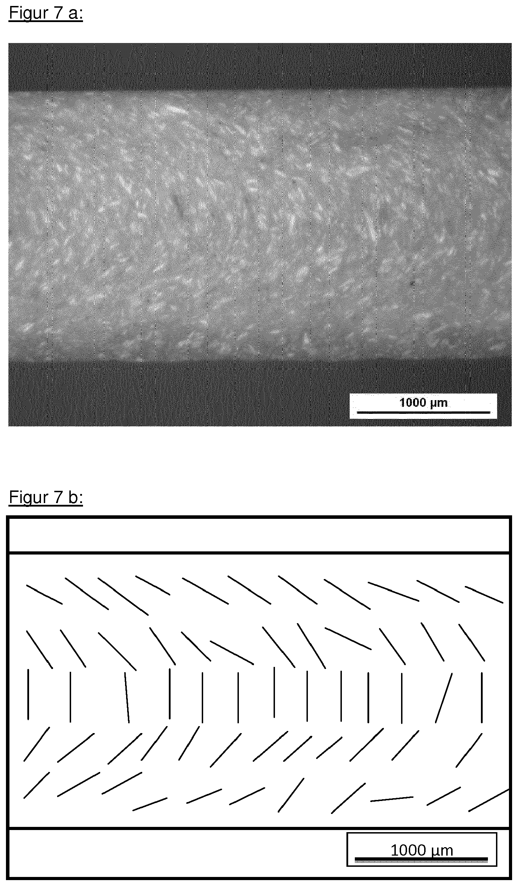

Figur 7 a zeigt eine lichtmikroskopische Aufnahme eines Querschliffes einer 2 mm dünnen spritzgegossenen Platte aus Beispiel Nr. 11. Die Hauptfließrichtung des Polymercompounds während der Füllung des Spritzgusswerkzeugs ist von links nach rechts. Ein Großteil der schuppenfömigen Bornitrid-Agglomerate im Kernbereich der Probe ist im Wesentlichen senkrecht zur Plattenoberfläche und senkrecht zur Hauptfließrichtung orientiert. Der Kernbereich macht ca. 50% des Bauteilvolumens aus. In der Gesamtprobe sind etwa 50 % der schuppenförmigen Bornitrid-Agglomerate mit einem Winkel von wenigstens 45° zur Bauteiloberfläche orientiert. Die 50 Vol.-% schuppenförmige Bornitrid-Agglomerate enthaltende PA6-Probe hat eine Through-plane Wärmeleitfähigkeit von 3,3 W/m*K.

Figur 7 b ist eine Schemazeichnung der Orientierungen der schuppenförmigen Bornitrid-Agglomerate aus Figur 7 a.

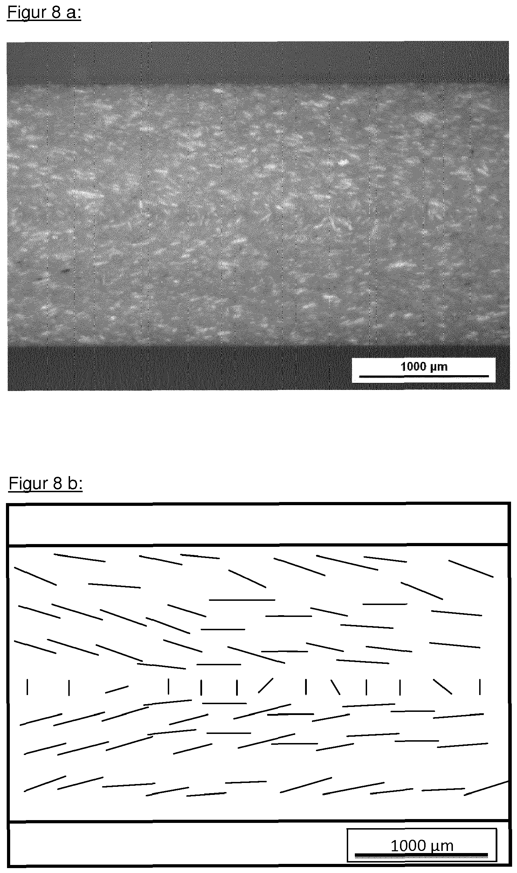

Figur 8 a zeigt eine lichtmikroskopische Aufnahme eines Querschliffes einer 2 mm dünnen spritzgegossenen Platte aus Beispiel Nr. 12. Die Hauptfließrichtung des Polymercompounds während der Füllung des Spritzgusswerkzeugs ist von links nach rechts. Ein geringer Teil der schuppenfömigen Bornitrid-Agglomerate im Kernbereich der Probe ist senkrecht zur Plattenoberfläche und senkrecht zur Hauptfließrichtung orientiert. Der Kernbereich ist relativ schmal und macht etwa 10 bis maximal 25 % des Bauteilvolumens aus. In der Gesamtprobe sind mehr als 70 % der schuppenförmigen Bornitrid-Agglomerate mit einem Winkel von höchstens 45° zur Bauteiloberfläche orientiert. Die 50 Vol.-% schuppenförmige Bornitrid-Agglomerate enthaltende PA6-Probe hat eine Through-plane Wärmeleitfähigkeit von 3,0 W/m*K.

Figur 8 b ist eine Schemazeichnung der Orientierungen der schuppenförmigen Bornitrid-Agglomerate aus Figur 8 a.

Wie oben bereits ausgeführt, ist die Through-Plane-Wärmeleitfähigkeit die in der Through-Plane-Richtung, also senkrecht zur Plattenebene, gemessene Wärmeleitfähigkeit. Die In-Plane-Wärmeleitfähigkeit ist die in In-Plane-Richtung, also in der Plattenebene, gemessene Wärmeleitfähigkeit.

Die Through-plane-Wärmeleitfähigkeit der erfindungsgemäßen Bauteile und Polymer-Bornitrid-Compounds beträgt vorzugsweise wenigstens 1 W/m*K, weiter vorzugsweise wenigstens 1,2 W/m*K, weiter vorzugsweise wenigstens 1,5 W/m*K und insbesondere bevorzugt wenigstens 1,8 W/m*K. Die Wärmeleitfähigkeit wird gemäß DIN EN ISO 22007-4 an scheibenförmigen spritzgegossenen Proben einer Dicke von 2 mm gemessen.

Die In-plane-Wärmeleitfähigkeit der erfindungsgemäßen Bauteile und Polymer-Bornitrid-Compounds beträgt vorzugsweise wenigstens 1,5 W/m*K, weiter vorzugsweise wenigstens 1,8 W/m*K, weiter vorzugsweise wenigstens 2,2 W/m*K und insbesondere bevorzugt wenigstens 2,7 W/m*K.

Für die Messung der In-plane-Wärmeleitfähigkeit werden scheibenförmige spritzgegossene Proben einer Stärke von 2 mm aufeinandergestapelt und miteinander verklebt. Aus dem so präparierten Plattenstapel wird parallel zur Through-plane-Richtung und senkrecht zur Fließrichtung der spritzgegossenen Platten eine 2 mm dünne Probe mit den Maßen 2x10x10 mm$^3$ präpariert. Die Messung der In-plane-Wärmeleitfähigkeit erfolgt gemäß DIN EN ISO 22007-4 an der so präparierten 2 mm dicken Probe.

Die Through-plane-Wärmeleitfähigkeit des erfindungsgemäßen Bauteils und Polymer-Bornitrid-Compounds ist vorzugsweise um wenigstens 0,8 W/m*K, weiter vorzugsweise um wenigstens 1 W/m*K, weiter vorzugsweise um wenigstens 1,3 W/m*K und insbesondere bevorzugt um wenigstens 1,6 W/m*K höher als die Wärmeleitfähigkeit des Polymerwerkstoffs ohne wärmeleitenden Füllstoff.

Die In-plane-Wärmeleitfähigkeit des erfindungsgemäßen Bauteils und Polymer-Bornitrid-Compounds ist vorzugsweise um wenigstens 1,3 W/m*K, weiter vorzugsweise um wenigstens 1,6 W/m*K, weiter vorzugsweise um wenigstens 2,0 W/m*K und insbesondere bevorzugt um wenigstens 2,5 W/m*K höher als die Wärmeleitfähigkeit des Polymerwerkstoffs ohne wärmeleitenden Füllstoff.

Der Anteil an Bornitrid in Form von plättchenförmigen hexagonalen Bornitrid-Partikeln oder Bornitrid-Agglomeraten im erfindungsgemäßen Bauteil und Polymer-Bornitrid-Compound beträgt vorzugsweise wenigstens 5 Vol.-%, weiter vorzugsweise wenigstens 10 Vol.-%, weiter vorzugsweise wenigstens 20 Vol.-% und besonders bevorzugt wenigstens 30 Vol.-%, bezogen auf das Gesamtvolumen des Polymer-Bornitrid-Compounds.

Der Anteil an Bornitrid in Form von plättchenförmigen hexagonalen Bornitrid-Partikeln oder Bornitrid-Agglomeraten im erfindungsgemäßen Bauteil und Polymer-Bornitrid-Compound beträgt vorzugsweise höchstens 70 Vol.-%, weiter vorzugsweise höchstens 60 Vol.-% und besonders bevorzugt höchstens 50 Vol.-%, bezogen auf das Gesamtvolumen des Polymer-Bornitrid-Compounds.

Für das erfindungsgemäße Bauteil und Polymer-Bornitrid-Compound werden als Polymere thermoplastisch verarbeitbare Polymere eingesetzt. Dies sind insbesondere die thermoplastischen Werkstoffe Polyamid (PA), Polyphenylensulfid (PPS), Polycarbonat (PC), Polypropylen (PP), thermoplastische Elastomere (TPE), thermoplastische Polyurethan-Elastomere (TPU) und Polyätherätherketone (PEEK), flüssigkristalline Polymere (LCP) und Polyoxymethylen (POM). Als Polymere können auch duroplastische Formmassen, die thermoplastisch verarbeitet werden können, eingesetzt werden. Es kann darüber hinaus Kautschuk, beispielsweise synthetischer Kautschuk, verwendet werden, der thermoplastisch verarbeitet werden kann.

Das erfindungsgemäße Bauteil und Polymer-Bornitrid-Compound enthält plättchenförmige hexagonale Bornitrid-Partikel, die als nicht agglomerierte Primärpartikel oder auch in Form von Bornitrid-Agglomeraten vorliegen können. Als nicht agglomerierte plättchenförmige hexagonale Bornitrid-Primärpartikel wird gut kristallines hexagonales Bornitrid-Pulver eingesetzt. Vorzugsweise beträgt die mittlere Partikelgröße $d_{50}$ des gut kristallinen hexagonalen Bornitrid-Pulvers 3 bis 50 $\mu$m, es können aber auch größere Plättchen eingesetzt werden. Ebenso können Mischungen verschiedener hexagonaler Bornitrid-Pulver mit unterschiedlichen Partikelgrößen eingesetzt werden. Die Messung der mittleren Partikelgröße ($d_{50}$) der Bornitrid-Pulver erfolgt üblicherweise mittels Laserbeugung (Naßmessung, Mastersizer 2000, Malvern). Werden nicht agglomerierte Bornitrid-Partikel eingesetzt, so beträgt das Aspektverhältnis der plättchenförmigen hexagonalen Bornitrid-Partikel, also das Verhältnis von Plättchendurchmesser zu Plättchendicke, vorzugsweise 10 und mehr. Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden. Es ist auch möglich, Mischungen aus pulverförmigem oder granuliertem Bornitrid einzusetzen.

In einer bevorzugten Ausführungsform des erfindungsgemäßen Bauteils und Polymer-Bornitrid-Compounds werden die plättchenförmigen hexagonalen Bornitrid-Partikel in Form von schuppenförmigen Bornitrid-Agglomeraten eingesetzt. Bei diesen Bornitrid-Agglomeraten handelt es sich um Agglomerate umfassend plättchenförmige hexagonale Bornitrid-Primärpartikel, die miteinander zu schuppenförmig ausgebildeten Bornitrid-Agglomeraten agglomeriert sind. Diese Bornitrid-Agglomerate können auch als schuppenförmige Bornitrid-Agglomerate oder als Bornitrid-Flakes bezeichnet werden. Diese Bornitrid-Flakes sind zu unterscheiden von nicht agglomerierten plättchenförmigen Bornitrid-Primärpartikeln, die in der englischsprachigen Literatur oftmals auch als "flaky boron nitride particles" bezeichnet werden. Die schuppenförmigen Bornitrid-Agglomerate sind in ihrer Struktur aus vielen einzelnen Bornitrid-Plättchen aufgebaut. Die plättchenförmigen Bornitrid-Primärpartikel sind in diesen Agglomeraten nicht regellos zueinander orientiert. Die schuppenförmigen Bornitrid-Agglomerate umfassen plättchenförmige Bornitrid-Primärpartikel, deren Plättchenebenen parallel zueinander ausgerichtet sind. Vorzugsweise sind die plättchenförmigen Bornitrid-Primärpartikel miteinander in der Weise agglomeriert, dass die Plättchenebenen der Bornitrid-Primärpartikel im Wesentlichen parallel zueinander ausgerichtet sind. Die schuppenförmigen Bornitrid-Agglomerate haben anisotrope Eigenschaften, da die plättchenförmigen Bornitrid-Primärpartikel in diesen Agglomeraten nicht regellos zueinander orientiert sind.

Der Grad der Ausrichtung der plättchenförmigen Bornitrid-Primärpartikel in den anisotropen schuppenförmigen Bornitrid-Agglomeraten kann durch den Texturindex charakterisiert werden. Der Texturindex von hexagonalem Bornitrid (hBN) mit vollständig isotroper Ausrichtung der plättchenförmigen Bornitrid-Primärpartikel, also ohne Vorzugsorientierung, liegt bei 1. Mit dem Grad der Orientierung in der Probe, das heißt je mehr plättchenförmige Bornitrid-Primärpartikel mit ihren Basalflächen aufeinander bzw. parallel zueinander angeordnet sind, bzw. je mehr Plättchenebenen der Bornitrid-Primärpartikel parallel zueinander ausgerichtet sind, steigt der Texturindex an. Der Texturindex der für die erfindungsgemäßen Bauteile eingesetzten anisotropen schuppenförmigen Bornitrid-Agglomerate liegt vorzugsweise bei Werten von größer 2,0, vorzugsweise bei 2,5 und mehr, weiter vorzugsweise bei 3,0 und mehr, besonders bevorzugt bei 3,5 und mehr. Der Texturindex der schuppenförmigen Agglomerate kann auch Werte von 5,0 und mehr sowie von 10,0 und mehr aufweisen. Vorzugsweise liegt der Texturindex der schuppenförmigen Bornitrid-Agglomerate bei Werten von 200 und weniger, weiter vorzugsweise bei Werten von 50 und weniger. Die Bestimmung des Texturindex erfolgt röntgenographisch. Dazu wird das Verhältnis der an Röntgenbeugungsdiagrammen gemessenen Intensitäten des (002)- und des (100)-Beugungsreflexes bestimmt und durch den entsprechenden Verhältniswert für eine ideale, nicht texturierte hBN-Probe geteilt. Dieses ideale Verhältnis kann aus den JCPDS-Daten ermittelt werden und beträgt 7,29.

Der Texturindex (TI) der Bornitrid-Agglomerate kann somit gemäß der Formel

$$\text{TI} = \frac{I_{(002),\ Probe}\ /\ I_{(100),\ Probe}}{I_{(002),\ theoretisch}\ /\ I_{(100),\ theoretisch}} = \frac{I_{(002),\ Probe}\ /\ I_{(100),\ Probe}}{7,29}$$

als Verhältnis $I_{(002)}/I_{(100)}$ der Intensitäten des (002)- und des (100)-Beugungsreflexes des Röntgenbeugungsdiagramms der Bornitrid-Agglomerate, dividiert durch die Zahl 7,29, ermittelt werden. Der Texturindex der Bornitrid-Agglomerate wird an einer Schüttung der Bornitrid-Agglomerate gemessen. Die Messung wird bei 20 °C durchgeführt.

Wird der Texturindex an großen schuppenförmigen Einzel-Agglomeraten einer Größe von etwa 3,5 cm$^2$ (bezogen auf die Fläche der Ober- bzw. Unterseite der schuppenförmigen Agglomerate) ermittelt, so können für den Texturindex sehr hohe Werte von 100 und mehr und von bis zu etwa 500 erhalten werden. Diese an den großen schuppenförmigen Agglomeraten gemessenen Werte sind ein Beleg für die sehr starke Ausrichtung der Primärpartikel in den schuppenförmigen Bornitrid-Agglomeraten. Bei der Messung des Texturindex an den für die erfindungsgemäßen Bauteile und Polymer-Bornitrid-Compounds bevorzugt eingesetzten schuppenförmigen Bornitrid-Agglomeraten, die wie oben bereits beschrieben an einer Agglomeratschüttung durchgeführt wird, erfolgt teilweise eine statistische Ausrichtung im Probenträger für die röntgenografische Messung. Daher sind die an kleineren schuppenförmigen Agglomeraten einer Größe von ≤ 1 mm erhaltenen Werte für den Texturindex immer niedriger als es der Orientierung der Primärpartikel im einzelnen schuppenförmigen Agglomerat entspricht.

In den erfindungsgemäßen Polymer-Bornitrid-Compounds und den erfindungsgemäßen Bauteilen werden die anisotropen schuppenförmigen Bornitrid-Agglomerate vorzugsweise mit einem mittleren Agglomeratdurchmesser ($d_{50}$) von ≤ 1000 μm, weiter vorzugsweise von ≤ 500 μm, weiter vorzugsweise von ≤ 300 μm und insbesondere bevorzugt von ≤ 200 μm eingesetzt. Der mittlere Agglomeratdurchmesser ($d_{50}$) der in den erfindungsgemäßen Polymer-Bornitrid-Compounds und den erfindungsgemäßen Bauteilen eingesetzten anisotropen schuppenförmigen Bornitrid-Agglomerate beträgt vorzugsweise ≥ 20 μm, weiter vorzugsweise ≥ 30 μm, weiter vorzugsweise ≥ 50 μm und insbesondere bevorzugt ≥ 100 μm. Der mittlere Agglomeratdurchmesser ($d_{50}$) kann mittels Laserbeugung ermittelt werden (Naßmessung, Mastersizer 2000, Malvern). Der mittlere Agglomeratdurchmesser entspricht mindestens dem Zweifachen der mittleren Partikelgröße der bei der Agglomeratherstellung eingesetzten Bornitrid-Primärpartikel, bevorzugt mindestens der dreifachen Größe. Der mittlere Agglomeratdurchmesser kann auch das Zehnfache oder auch das Fünfzigfache oder mehr der mittleren Partikelgröße der bei der Agglomeratherstellung eingesetzten Bornitrid-Primärpartikel betragen. Die mittlere Partikelgröße der Primärpartikel ($d_{50}$) in den anisotropen schuppenförmigen Bornitrid-Agglomeraten beträgt ≤ 50 μm, bevorzugt ≤ 30 μm, weiter bevorzugt ≤ 15 μm, weiter bevorzugt ≤ 10 μm und insbesondere bevorzugt ≤ 6 μm.

Die Dicke der anisotropen schuppenförmigen Bornitrid-Agglomerate beträgt ≤ 500 μm, bevorzugt ≤ 200 μm, weiter bevorzugt ≤ 100 μm, weiter bevorzugt ≤ 70 μm, weiter bevorzugt ≤ 50 μm und insbesondere bevorzugt ≤ 35 μm. Die Dicke beträgt mindestens 1 μm, weiter bevorzugt ≥ 2 μm, weiter bevorzugt ≥ 3 μm und insbesondere bevorzugt ≥ 5 μm. Die Dicke der anisotropen schuppenförmigen Bornitrid-Agglomerate kann mit einer Präzisions-Digital-Messuhr oder im Raserelektronenmikroskop (REM) ermittelt werden.

Das Aspektverhältnis, d. h. das Verhältnis des Agglomeratdurchmessers zur Agglomeratdicke der schuppenförmigen Bornitrid-Agglomerate kann anhand von rasterelektronenmikroskopischen (REM-) Aufnahmen ermittelt werden, indem Agglomeratdurchmesser und -dicke vermessen werden. Das Aspektverhältnis der schuppenförmigen Agglomerate liegt bei einem Wert von größer als 1, vorzugsweise bei Werten von 2 und mehr, weiter vorzugsweise bei Werten von 3 und mehr und besonders bevorzugt bei Werten von 5 und mehr.

Die anisotropen schuppenförmigen Bornitrid-Agglomerate sind Bornitrid-Agglomerate hoher Dichte.

In den anisotropen schuppenförmigen Bornitrid-Agglomeraten gibt es direkte Kontaktstellen zwischen den einzelnen plättchenförmigen Bornitrid-Primärpartikeln, so dass es in den Bornitrid-Agglomeraten durchgehende aus Bornitrid-Primärpartikeln aufgebaute Wärmeleitpfade gibt.

Die für die erfindungsgemäßen Bauteile und Bornitrid-Polymer-Compounds bevorzugt eingesetzten schuppenförmigen Bornitrid-Agglomerate haben auf ihrer Ober- und Unterseite durch das Formgebungsverfahren unmittelbar erzeugte, nicht durch Zerkleinern hergestellte Oberflächen. Diese Oberflächen werden im Folgenden als "Formgebungsflächen" bezeichnet. Die Formgebungsflächen sind vergleichsweise glatt im Unterschied zu den rauen seitlichen Oberflächen (Bruchflächen) der Agglomerate, die durch Brechen bzw. Zerkleinerungsschritte entstanden sind. Die Oberflächen der schuppenförmigen Bornitrid-Agglomerate sind im Wesentlichen eben (planar) und ihre Ober- und Unterseite sind weitgehend parallel zueinander.

Der Anteil der Formgebungsfläche an der Gesamtoberfläche der schuppenförmigen Bornitrid-Agglomerate beträgt bei Annahme einer Plättchen- bzw. Schuppenform mit runder Grundfläche durchschnittlich mindestens 33 % (für den Fall, dass der Durchmesser der Agglomerate gleich ihrer Höhe ist) und bei Annahme einer Plättchen- bzw. Schuppenform mit quadratischer Grundfläche ebenfalls mindestens 33 % (für den Fall von würfelförmigen Agglomeraten). Für schuppenförmigen Bornitrid-Agglomerate mit hohem Aspektverhältnis liegt der Anteil der Formgebungsfläche an der Gesamtoberfläche deutlich höher, für Agglomerate mit einem Aspektverhältnis > 3,0 liegt der Anteil üblicherweise zwischen 60 und 95 %, für sehr große Agglomerate kann der Anteil noch höher liegen. Durch Verrunden der Agglomerate oder als Folge eines Sieb- bzw. Klassierungsprozesses kann sich der Anteil der Formgebungsfläche an der Gesamtoberfläche reduzieren, in der Regel beträgt der Anteil aber stets wenigstens 10 %, vorzugsweise wenigstens 20 %.

Das Verhältnis von Formgebungsfläche zu Gesamtoberfläche kann durch Auswertung von REM-Aufnahmen ermittelt werden. Dazu werden die zur Bestimmung des Aspektverhältnisses ermittelten Werte für Agglomeratdurchmesser und -dicke verwendet. Aus diesen Werten wird der Anteil der Formgebungsfläche an der Gesamtoberfläche wie folgt ermittelt:

$$\text{Anteil Formgebungsfläche [\%]} = ((2 * \text{Stirnfläche})/\text{Gesamtoberfläche}) * 100$$

wobei

$$\text{Stirnfläche} = \text{Agglomeratdurchmesser} * \text{Agglomeratdurchmesser}$$

$$\text{Gesamtoberfläche} = 2 * \text{Stirnfläche} + 4 * \text{Seitenfläche}$$

$$\text{Seitenfläche} = \text{Agglomeratdicke} * \text{Agglomeratdurchmesser}$$

Die für das erfindungsgemäße Bauteil und Polymer-Bornitrid-Compound bevorzugt eingesetzten schuppenförmigen Bornitrid-Agglomerate verfügen über eine hohe Agglomeratstabilität. Bornitrid-Agglomerate mit einer hohen Agglomeratstabilität werden auch unter Einwirkung von hohen Scherkräften, wie sie bei der Compoundierung der Polymere zusammen mit den Bornitrid-Füllstoffen insbesondere bei hohen Füllgraden auftreten, nur teilweise zu Primärpartikeln oder Agglomeratfragmenten degradiert. Die vorteilhaften Eigenschaften des erfindungsgemäßen Polymer-Borntrid-Compounds, insbesondere das Anisotropieverhältnis, bleiben trotz der teilweisen Degradation erhalten.

Die Stabilität der Agglomerate lässt sich beispielsweise in Ultraschalluntersuchungen bei gleichzeitiger Messung der Agglomeratgröße über Lasergranulometrie untersuchen, wobei durch die Einwirkung des Ultraschalls das Agglomerat mit der Zeit zerfällt. Der Zerfall der Agglomerate wird über die zeitliche Veränderung der Agglomeratgröße aufgezeichnet, wobei sich je nach Agglomeratstabilität unterschiedliche Kurvenverläufe ausbilden. Weiche Agglomerate zerfallen dabei schneller als mechanisch stabilere Agglomerate.

Für die Messung der Agglomeratstabilität werden Bornitrid-Agglomerate kleiner 200 $\mu$m gebrochen und der Feinanteil < 100 $\mu$m wird abgesiebt. An der so erhaltenen Siebfraktion 100 - 200 $\mu$m wird mittels eines Lasergranulometers (Mastersizer 2000 mit Dispergiereinheit Hydro 2000S, Malvern, Herrenberg, Deutschland) die Agglomeratstabilität bestimmt. Dazu wird als Dispergiermedium eine Lösung aus einem Netzmittel in Wasser (Mischung aus 2 ml eines Spülmittels (G 530 Spülfix, BUZIL-Werk Wagner GmbH & Co. KG, Memmingen) und 0,375 ml Imbentin (Polyethylenglycolalkylether) in 10 l destilliertem Wasser) verwendet. In einem Schnappdeckelgläschen (8 ml) werden 10 - 20 mg der Agglomerate mit 6 ml des Dispergiermediums durch Schütteln dispergiert. Aus der Probe wird mit einer Pipette Suspension entnommen und in die Nassmesszelle des Lasergranulometers getropft, bis die Laserverdunklung 5 % erreicht (spezifizierter Bereich: 5 - 30%). Es wird mit einer Messung ohne Ultraschall begonnen und alle 15 Sekunden wird je eine weitere Messung mit Ultraschall durchgeführt, wobei die über die Gerätesoftware auf Werte zwischen 0 und 100 % einstellbare Ultraschallleistung der Dispergiereinheit jeweils auf 5 % der Maximalleistung eingestellt wird. Insgesamt werden zehn Messungen durchgeführt. Bei den Messungen läuft der Rührer der Dispergiereinheit mit 1750 U/min. Als Maß für die Agglomeratstabilität wird der Quotient aus dem $d_{90}$-Wert nach den zehn Messungen und dem $d_{90}$-Wert der ersten Messung herangezogen (multipliziert mit 100 zur Angabe in Prozent). Die hier beschriebene Messmethode wird im Folgenden auch als "Ultraschallmethode" bezeichnet.

Die Agglomeratstabilität der für die erfindungsgemäßen Polymer-Bornitrid-Compounds und die erfindungsgemäßen Bauteile bevorzugt eingesetzten schuppenförmigen Bornitrid-Agglomerate beträgt vorzugsweise wenigstens 40 %, weiter bevorzugt wenigstens 50 % und insbesondere bevorzugt wenigstens 60 %. Die Agglomeratstabilität wird dabei mit der oben beschrieben Ultraschallmethode bestimmt.

Die spezifische Oberfläche (BET) der für die erfindungsgemäßen Polymer-Bornitrid-Compounds und die erfindungsgemäßen Bauteile bevorzugt eingesetzten schuppenförmigen Bornitrid-Agglomerate beträgt vorzugsweise 20 $m^2$/g und weniger, weiter vorzugsweise 10 $m^2$/g und weniger.

Die für die erfindungsgemäßen Polymer-Bornitrid-Compounds und die erfindungsgemäßen Bauteile bevorzugt eingesetzten schuppenförmigen Bornitrid-Agglomerate sind im Unterschied zu nicht agglomerierten Bornitrid-Pulvern rieselfähig und gut dosierbar.

Bei gleichem Anteil an Bornitrid können in den erfindungsgemäßen Bauteilen mit den schuppenförmigen Bornitrid-Agglomeraten höhere Wärmeleitfähigkeitswerte als mit nicht agglomerierten Bornitrid-Pulvern erhalten werden. Mit den schuppenförmigen Bornitrid-Agglomeraten können höhere Füllgrade in Bornitrid-Polymer-Compounds und in daraus hergestellten Bauteilen als mit nicht agglomerierten Bornitrid-Pulvern erhalten werden.

Zur Herstellung der schuppenförmigen Bornitrid-Agglomerate wird Bornitrid-Ausgangspulver in Form von Bornitrid-Primärpartikeln oder amorphem Bornitrid, gegebenenfalls vermischt mit Bindephasen-Rohstoffen, in einem Formgebungsschritt zu schuppenförmigen Agglomeraten verarbeitet und anschließend einem thermischen Behandlungsschritt, einer Hochtemperaturglühung, unterzogen und die erhaltenen schuppenförmigen Agglomerate gegebenenfalls anschließend noch zerkleinert und/oder fraktioniert.

Die Formgebung der schuppenförmigen Bornitrid-Agglomerate erfolgt durch Verdichten der trockenen oder angefeuchteten Pulvermischung mittels Uniaxialpressen oder über Walzenkompaktieren.

Vorzugsweise wird zur Formgebung das Bornitrid-Ausgangspulver bzw. die Pulvermischung aus Bornitrid-Ausgangspulver und Bindephasen-Rohstoffen zwischen zwei sich drehenden gegenläufigen Walzen verpresst. Dabei werden Anpresskräfte im Walzenspalt von ≥ 0,5 kN, vorzugsweise von ≥ 1 kN, weiter vorzugsweise von ≥ 2 kN, weiter vorzugsweise von ≥ 3 kN, weiter vorzugsweise von ≥ 5 kN, weiter vorzugsweise von ≥ 7 kN und besonders bevorzugt von ≥ 10 kN pro cm Walzspaltlänge eingestellt. Der Anpressdruck der Walzen hat Einfluss auf die Dichte der anisotropen schuppenförmigen Bornitrid-Agglomerate. Bei hohen Anpressdrücken wird ein Teil des Bornitrid-Rohstoffs amorphisiert, der bei der anschließenden Hochtemperaturglühung rekristallisiert. Die Herstellung der anisotropen schuppenförmigen Bornitrid-Agglomerate kann auch bei Verwendung mikrostrukturierter Walzen erfolgen.

Die Restfeuchte der hergestellten Agglomerate kann vor der weiteren Temperaturbehandlung bzw. Nitridierung durch eine Trocknung bei ca. 100 °C ausgetrieben werden.

Das zu schuppenförmigen Agglomeraten kompaktierte Material wird einem thermischen Behandlungsschritt, einer Hochtemperaturglühung, unterzogen. Werden die schuppenförmigen Agglomerate ohne Zusatz von Bindephasen-Rohstoffen und nur unter Verwendung von Bornitrid-Ausgangspulvern, also von Bornitrid-Primärpartikeln oder amorphem Bornitrid, hergestellt, so erfolgt die Hochtemperaturglühung der schuppenförmigen Agglomerate bei Temperaturen von mindestens 1600 °C, vorzugsweise von mindestens 1800 °C.

Die erhaltenen schuppenförmigen Agglomerate können gegebenenfalls anschließend noch zerkleinert und/oder fraktioniert werden.

Mit steigendem Anpressdruck bei der Kompaktierung und mit steigender Temperatur bei der thermischen Behandlung steigt die Stabilität der anisotropen schuppenförmigen Bornitrid-Agglomerate an, ebenso wie die Wärmeleitfähigkeit, gemessen an dünnen Platten einer Stärke von 2 mm, die aus erfindungsgemäßen Polymer-Bornitrid-Compounds unter Verwendung der anisotropen schuppenförmigen Bornitrid-Agglomerate hergestellt wurden.

Bei der Herstellung der anisotropen schuppenförmigen Bornitrid-Agglomerate können Bornitrid-Pulver ohne weitere Zusätze eingesetzt und zu den anisotropen schuppenförmigen Bornitrid-Agglomeraten verarbeitet werden. Vorzugsweise werden Mischungen aus hexagonalem Bornitrid-Pulver und anderen Pulvern eingesetzt und somit anisotrope schuppenförmige Mischagglomerate aus Bornitrid und Sekundärphasen hergestellt ("Bornitrid-Hybrid-Flakes"). Bei den zur Herstellung der anisotropen schuppenförmigen Mischagglomerate zum hexagonalen Bornitrid-Pulver zugesetzten weiteren Pulvern handelt es sich um Bindephasen-Rohstoffe zur Erzeugung einer anorganischen Bindephase. In den anisotropen schuppenförmigen Mischagglomeraten sind die hexagonalen Bornitrid-Primärpartikel miteinander mittels einer anorganischen Bindephase als Sekundärphase verbunden.

Die anorganische Bindephase der anisotropen schuppenförmgien Bornitrid-Mischagglomerate umfasst wenigstens ein Carbid, Borid, Nitrid, Oxid, Hydroxid, Metall oder Kohlenstoff.

Die plättchenförmigen Bornitrid-Primärpartikel sind in diesen schuppenförmigen Mischagglomeraten wie in den bindephasenfreien anisotropen schuppenförmigen Bornitrid-Agglomeraten nicht regellos zueinander orientiert. Die schuppenförmigen Bornitrid-Mischagglomerate umfassen plättchenförmige Bornitrid-Primärpartikel, deren Plättchenebenen parallel zueinander ausgerichtet sind. Vorzugsweise sind die plättchenförmigen Bornitrid-Primärpartikel miteinander in der Weise agglomeriert, dass die Plättchenebenen der Bornitrid-Primärpartikel im Wesentlichen parallel zueinander ausgerichtet sind. Die schuppenförmigen Bornitrid-Mischagglomerate haben anisotrope Eigenschaften, da die plättchenförmigen Bornitrid-Primärpartikel in diesen Agglomeraten nicht regellos zueinander orientiert sind.

Die Bindephase befindet sich in den anisotropen schuppenförmigen Bornitrid-Mischagglomeraten (Bornitrid-Hybrid-Flakes) zwischen den Bornitrid-Primärpartikeln, sie kann sich auch zumindest teilweise auf der Oberfläche der Bornitrid-Hybrid-Flakes befinden oder die Oberfläche zum großen Teil bedecken. Die Bindephase bindet die Bornitrid-Primärpartikel in den Bornitrid-Hybrid-Flakes, so dass im Vergleich zu binderfreien Agglomeraten mechanisch stabilere Agglomerate erhalten werden können.

Vorzugsweise haben die anisotropen schuppenförmigen Bornitrid-Mischagglomerate einen Bindephasen-Anteil von wenigstens 1 %, weiter vorzugsweise von wenigstens 5 %, weiter vorzugsweise von wenigstens 10 %, weiter vorzugsweise von wenigstens 20 % und insbesondere vorzugsweise von wenigstens 30 %, jeweils bezogen auf die Gesamtmenge der schuppenförmigen Bornitrid-Agglomerate.

Die Hochtemperaturglühung der schuppenförmigen Bornitrid-Agglomerate mit anorganischer Bindephase wird bei Temperaturen von wenigstens 1000 °C durchgeführt.

In einer weiteren bevorzugten Ausführungsform umfasst die anorganische Bindephase der anisotropen schuppenförmigen Mischagglomerate wenigstens ein Nitrid und/oder Oxinitrid. Bei den Nitriden und Oxinitriden handelt es sich vorzugsweise um Verbindungen der Elemente Aluminium, Silizium, Titan und Bor.

Diese Bornitrid-Mischagglomerate können auch als anisotrope nitridgebundene Bornitrid-Agglomerate bzw. als anisotrope Bornitrid-Agglomerate mit nitridischer Bindephase bezeichnet werden.

Vorzugsweise handelt es sich bei den in der Bindephase enthaltenen Nitriden und Oxinitriden um Aluminiumnitrid (AlN), Aluminiumoxinitrid, Titannitrid (TiN), Siliziumnitrid ($Si_3N_4$) und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid enthält. Besonders bevorzugt enthält die Bindephase Aluminiumnitrid.

Die Nitride und Oxinitride der Bindephase können amorph, teilkristallin oder kristallin sein. Vorzugsweise ist die Bindephase kristallin, da damit höhere Wärmeleitfähigkeitswerte in den erfindungsgemäßen Polymer-Bornitrid-Compounds und den erfindungsgemäßen Bauteilen erzielt werden können.

Die Nitride und/oder Oxinitride enthaltende Bindephase kann zusätzlich auch oxidische Phasen enthalten, wie beispielsweise Boroxid ($B_2O_3$), Aluminiumoxid ($Al_2O_3$), Siliziumdioxid ($SiO_2$), Titandioxid ($TiO_2$), Yttriumoxid ($Y_2O_3$), Magnesiumoxid (MgO), Calciumoxid (CaO) und Seltenerdmetalloxide.

Weiterhin kann die Bindephase zusätzlich noch Borate enthalten, beispielsweise Aluminiumborate oder Calciumborate. Außerdem kann die Bindephase noch Verunreinigungen enthalten, beispielsweise Kohlenstoff, metallische Verunreinigungen, elementares Bor, Boride, Borcarbid oder andere Carbide wie beispielsweise Siliziumcarbid.

Der Anteil der Nitride und Oxinitride in der Bindephase beträgt vorzugsweise wenigstens 50 Gew.-%, besonders bevorzugt wenigstens 80 Gew.-%, bezogen auf die Gesamtmenge der Bindephase.

Vorzugsweise enthält die Bindephase Aluminiumnitrid, Siliziumnitrid oder Titannitrid oder Mischungen daraus in einem Anteil von $\geq$ 50 Gew.-% bezogen auf die Gesamtmenge der Bindephase. Insbesondere bevorzugt enthält die Bindephase Aluminiumnitrid, vorzugsweise in einem Anteil von $\geq$ 90 Gew.-% bezogen auf die Gesamtmenge der Bindephase.

Als Bindephasen-Rohstoffe zur Erzeugung der nitridischen Bindephase der anisotropen nitridgebundenen Bornitrid-Agglomerate werden vorzugsweise Metallpulver eingesetzt, die über direkte Nitridierung in das entsprechende Metallnitrid oder in ein Oxinitrid oder in Mischungen von Metallnitriden und Oxinitriden umgewandelt werden. Vorzugsweise handelt es sich bei den eingesetzten Metallpulvern um Aluminium-, Silizium- oder Titanpulver oder Mischungen davon. Insbesondere bevorzugt wird Aluminiumpulver eingesetzt. Im Nitridierschritt wird das Metall zum entsprechenden Metallnitrid umgesetzt. Es ist auch möglich, dass bei der Nitridierung Oxinitride bzw. Mischungen von Metallnitriden und Oxinitriden entstehen.

Als Bindephasen-Rohstoffe zur Erzeugung der nitridischen Bindephase der anisotropen nitridgebundenen Bornitrid-Agglomerate können auch Metallverbindungen in Kombination mit Reduktionsmitteln eingesetzt werden, die nitridische Bindephase wird dabei über eine Reduktions-Nitridierung hergestellt. Als Metallverbindungen werden dabei vorzugsweise Verbindungen der Elemente Aluminium, Silizium und Titan eingesetzt, bevorzugt Oxide und/oder Hydroxide wie beispielsweise Aluminiumoxid ($Al_2O_3$), Aluminiumhydroxid ($Al(OH)_3$), Böhmit (AlOOH), Siliziumdioxid ($SiO_2$) und Titandioxid ($TiO_2$). Als Metallverbindungen können weiterhin Borate eingesetzt werden, beispielsweise Aluminiumborat. Als Reduktionsmittel können Kohlenstoff und Wasserstoff sowie organische Verbindungen wie beispielsweise Polyvinylbutyral (PVB), Melamin und Methan eingesetzt werden. Werden gasförmige Stoffe wie beispielsweise Wasserstoff oder Methan als Reduktionsmittel eingesetzt, so werden diese Stoffe der Nitridieratmosphäre zugesetzt. Das zur Reduktion notwendige Reduktionsmittel kann auch bereits in der Metallverbindung vorliegen, so dass sich der Einsatz zusätzlicher Reduktionsmittel erübrigt, beispielsweise bei Einsatz von Aluminiumisopropoxid, Tetraethylorthosilikat oder Titanisopropoxid als Bindemittel-Rohstoff. Im Nitridierschritt werden die Metallverbindungen zu den entsprechenden Metallnitriden umgesetzt. Es ist auch möglich, dass bei der Nitridierung Oxinitride bzw. Mischungen von Metallnitriden und Oxinitriden entstehen, ebenso kann die Bindephase noch Reste von nicht umgesetzten Oxiden enthalten.

Als Bindephasen-Rohstoffe zur Erzeugung der nitridischen Bindephase der anisotropen nitridgebundenen Bornitrid-Agglomerate können auch Edukte zur Herstellung von Bornitrid eingesetzt werden. Die Edukte zur Herstellung von Bornitrid können eine oxidische Borquelle wie beispielsweise Borsäure ($H_3BO_3$) und Boroxid ($B_2O_3$) in Kombination

mit einem Reduktionsmittel wie beispielsweise Kohlenstoff oder Wasserstoff oder organischen Verbindungen wie Polyvinylalkohol (PVA), Polyvinylbutyral (PVB), Melamin und Methan enthalten. Werden gasförmige Stoffe wie beispielsweise Wasserstoff oder Methan als Reduktionsmittel eingesetzt, so werden diese Stoffe der Nitridieratmosphäre zugesetzt. Weiterhin können als Edukte zur Herstellung von Bornitrid im Wesentlichen sauerstofffreie Borquellen wie beispielsweise elementares Bor, Borcarbid und Trimethylborat eingesetzt werden. Im Nitridierschritt werden diese Rohstoffe zu hexagonalem Bornitrid umgesetzt.

Als Bindephasen-Rohstoffe zur Erzeugung der nitridischen Bindephase der anisotropen nitridgebundenen Bornitrid-Agglomerate können weiterhin nitridische Materialien eingesetzt werden, die sich bei der Temperaturbehandlung in der Nitridieratmosphäre verfestigen. Das nitridische Material kann eine Nitrid- und/oder Oxinitrid-Verbindung von Aluminium und Silizium sein, es können auch Titannitrid und die Nitride der Seltenen Erden eingesetzt werden, ebenso wie Verbindungen aus der Gruppe der Sialone. Als Sinterhilfsstoffe können Flüssigphasen eingesetzt werden wie beispielsweise Yttriumoxid, Aluminiumoxid, Magnesiumoxid, Calciumoxid, Siliziumoxid und Oxide der Seltenen Erden.

Es ist auch möglich, Mischungen der verschiedenen aufgeführten Bindephasen-Rohstoffe einzusetzen.

Als Bornitrid-Ausgangspulver zur Erzeugung der anisotropen schuppenförmigen Bornitrid-Agglomerate können hexagonales Bornitrid, amorphes Bornitrid, teilkristallines Bornitrid, sowie Mischungen davon eingesetzt werden.

Die mittlere Partikelgröße $d_{50}$ des eingesetzten Bornitrid-Pulvers kann 0,5 - 50 $\mu$m, vorzugsweise 0,5 - 15 $\mu$m, weiter vorzugsweise 0,5 - 5 $\mu$m betragen. So können beispielsweise hexagonale Bornitrid-Pulver mit einer mittleren Partikelgröße von 1 $\mu$m, 3 $\mu$m, 6 $\mu$m, 9 $\mu$m und 15 $\mu$m eingesetzt werden, aber auch höhere mittlere Partikelgrößen bis zu 50 $\mu$m sind möglich. Ebenso können Mischungen verschiedener hexagonaler Bornitrid-Pulver mit unterschiedlichen Partikelgrößen eingesetzt werden. Die Messung der mittleren Partikelgröße ($d_{50}$) der eingesetzten Bornitrid-Pulver erfolgt üblicherweise mittels Laserbeugung (Naßmessung, Mastersizer 2000, Malvern).

Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden. Es ist auch möglich, Mischungen aus pulverförmigem oder granuliertem Bornitrid einzusetzen. Die Bindephasen-Rohstoffe können in fester oder flüssiger bzw. pastöser Form vorliegen.

Die Vermischung von Bornitrid-Ausgangspulver und Bindephasen-Rohstoffen kann beispielsweise in einer Mischtrommel, in einem V-Mischer, Röhnradmischer, einer Schwingmühle oder einem Eirichmischer erfolgen. Die Homogenität kann in einem folgenden Mahlschritt (z.B. Schlagkreuzmühle, Trommelmühle, Rührwerkskugelmühle) weiter erhöht werden. Die Pulvermischung kann trocken oder angefeuchtet sein. Der Zusatz von Presshilfsmitteln und ggf. Gleithilfsmitteln ist ebenfalls möglich. Die Vermischung kann auch nass erfolgen, beispielsweise wenn die anschließende Herstellung der Granulate über Sprühtrocknen oder Aufbaugranulation erfolgt.

Das zu schuppenförmigen Agglomeraten kompaktierte Material wird anschließend einer Hochtemperaturglühung in einer Nitridieratmosphäre unterzogen, bei Temperaturen von mindestens 1600°C, vorzugsweise von mindestens 1800°C. Die Nitridieratmosphäre umfasst vorzugsweise Stickstoff und/oder Ammoniak. Vorzugsweise enthält die Nitridieratmosphäre zusätzlich Argon. Nach Erreichen der Maximaltemperatur kann eine Haltezeit von bis zu mehreren Stunden oder Tagen eingelegt werden. Die Temperaturbehandlung kann in einem kontinuierlichen oder in einem Batch-Verfahren durchgeführt werden.

Durch die Temperaturbehandlung in der Nitridieratmosphäre entsteht eine nitridische Bindephase als Sekundärphase, die die Bornitrid-Primärpartikel miteinander verbindet. Durch den Nitridierschritt kann der Kristallisationsgrad der Primärpartikel zunehmen, was mit einem Primärpartikelwachstum verbunden ist.

Der Rest an bei der Nitridierung nicht umgesetzten Rohstoffen in der Bindephase in den anisotropen nitridgebundenen Bornitrid-Mischagglomeraten beträgt bevorzugt $\leq$ 10 %, weiter bevorzugt $\leq$ 5 %, weiter bevorzugt $\leq$ 3 % und besonders bevorzugt $\leq$ 2 %. Die Verunreinigung mit Sauerstoff beträgt bevorzugt $\leq$ 10%, weiter bevorzugt $\leq$ 5 %, weiter bevorzugt $\leq$ 2 % und besonders bevorzugt $\leq$ 1 %.

Das zu schuppenförmigen Agglomeraten kompaktierte Material wird vor der Hochtemperaturbehandlung vorzugsweise noch einer Temperaturbehandlung bei einer Temperatur von mindestens 700 °C in einer Nitridieratmosphäre unterzogen, wobei die Temperatur dieser ersten Temperaturbehandlung unterhalb der Temperatur der Hochtemperaturbehandlung liegt. Die Nitridieratmosphäre dieser Vornitridierung umfasst vorzugsweise Stickstoff und/oder Ammoniak. Vorzugsweise enthält die Nitridieratmosphäre zusätzlich Argon.

Mit steigender Temperatur und Dauer bei der Temperaturbehandlung nimmt der Kristallisationsgrad der in den schuppenförmigen Bornitrid-Mischagglomeraten enthaltenen Bornitrid-Primärpartikel zu, und der Sauerstoffgehalt und die spezifische Oberfläche der enthaltenen Bornitrid-Primärpartikel nehmen ab.

Zur Erreichung der Zielagglomeratgröße der schuppenförmigen Bornitrid-Agglomerate können übliche Schritte wie Sieben, Siebbrechen und Sichten eingesetzt werden. Gegebenenfalls enthaltener Feinanteil kann als erstes entfernt werden. Alternativ zum Sieben kann die definierte Zerkleinerung der Agglomerate auch über Siebreiben, Sichtermühlen, strukturierte Walzenbrecher und Schneidräder erfolgen. Auch eine Mahlung beispielsweise in einer Kugelmühle ist möglich. Die mehrere Millimeter bis mehrere Zentimeter großen Agglomerate werden in einem weiteren Prozessschritt auf definierte Agglomeratgrößen verarbeitet. Hierzu können beispielsweise handelsübliche Siebe unterschiedlicher Siebweite und Siebhilfen auf einem Rüttelsieb verwendet werden. Ein mehrstufiger Sieb-/Siebzerkleinerungsprozess hat sich als vorteilhaft erwiesen.

Die anisotropen schuppenförmigen Bornitrid-Agglomerate können im Anschluss an ihre Herstellung noch weiteren Behandlungen unterzogen werden. Dabei können beispielsweise eine oder mehrere der folgenden möglichen derartigen Behandlungen durchgeführt werden:

- eine Wasserdampfbehandlung

- eine Oberflächenmodifizierung mit Silanen, Titanaten oder anderen metallorganischen Verbindungen, entweder bei Raumtemperatur oder unter Temperatureinwirkung und mit Träger- oder Reaktionsgasen. Diese Oberflächenmodifizierung erhöht im Fall der nitridgebundenen schuppenförmigen Agglomerate auch die Hydrolysebeständigkeit der nitridischen Bindephase.

- eine Oberflächenmodifizierung mit Polymeren, beispielsweise mit Polyethylenglykol (PEG), Polyvinylalkohol (PVA), Polyvinylbutyral (PVB), Polyvinylpyrroldion (PVP), Copolymeren, Acrylaten, Ölen oder Carbonsäuren

- eine Infiltration mit Sol-Gel-Systemen, beispielsweise mit Böhmitsol oder $SiO_2$-Sol, oder mit wasserlöslichen Gläsern oder Nanopartikeln oder oberflächenmodifizierten Nanopartikeln oder Mischungen daraus.

- eine Infiltration mit wasser- oder ethanollöslichen Polymeren. Die Bornitrid-Agglomerate können mit Harzen, wie beispielsweise Silikon-, Epoxy- oder Polyurethan-Harzen infiltriert werden und das Harz mit Härter oder temperaturhärtend vor oder während der Compoundierung aushärten.

- im Fall der nitridgebundenen schuppenförmigen Agglomerate eine Temperaturbehandlung unter Sauerstoff, die zur oberflächlichen Oxidation der anisotropen nitridgebundenen Bornitrid-Agglomerate führt. So können beispielsweise durch eine oberhalb von 500 °C durchgeführte Oxidation an Luft von Agglomeraten mit Titannitrid (TiN) enthaltender Bindephase Agglomerate mit oberflächlichem Titandioxid ($TiO_2$) hergestellt werden, bei einer Siliziumnitrid ($Si_3N_4$) enthaltenden Bindephase kann oberflächliches Siliziumdioxid ($SiO_2$) und bei einer Aluminiumnitrid (AIN) enthaltenden Bindephase kann oberflächliches Aluminiumoxid ($Al_2O_3$) erzeugt werden. Für anisotrope nitridgebundene Bornitrid-Agglomerate enthaltend AIN als Bindephase kann eine Temperaturbehandlung an Luft durchgeführt werden, bevorzugt bei Temperaturen von 500 °C und höher, weiter bevorzugt bei Temperaturen zwischen 700 °C und 1200°C und insbesondere bevorzugt bei Temperaturen zwischen 700 °C und 1000 °C.

Die aufgeführten Oberflächenbehandlungen können auch für Gemische von anisotropen nitridgebundenen Bornitrid-Agglomeraten mit anderen Bornitrid-Füllstoffen wie beispielsweise Bornitrid-Primärpartikeln durchgeführt werden.

Es ist auch möglich, mehrere der aufgeführten Behandlungen in beliebiger Reihenfolge zu kombinieren. Die Behandlungen können beispielsweise im Wirbelschichtverfahren durchgeführt werden.

Durch die aufgeführten Behandlungen kann in den erfindungsgemäßen Polymer-Bornitrid-Compounds eine verbesserte Ankopplung der Polymermatrix an die schuppenförmigen Bornitrid-Agglomerate erzielt werden.

Die anisotropen nitridgebundenen Bornitrid-Agglomerate weisen eine ausgezeichnete mechanische Stabilität auf. Die mechanische Stabilität der Bornitrid-Agglomerate ist von Bedeutung, da sie das Abfüllen, den Transport, die Dosierung, die Compoundierung, also die Weiterverabeitung der Bornitrid-Agglomerate zu Polymer-Bornitrid-Compounds und die anschließende Formgebung über Spritzguss möglichst mit nur geringem Zerfall überstehen müssen. Falls die Bornitrid-Agglomerate beim Compoundieren zerfallen, besteht die Gefahr, dass sich die rheologischen Eigenschaften der Polymer-Bornitrid-Compounds verschlechtern und die Wärmeleitfähigkeit in den aus den Compounds hergestellten Bauteilen insbesondere bei spritzgegossenen dünnen Platten in Through-plane-Richtung abnimmt. Dabei besteht die Gefahr, dass die Bornitrid-Agglomerate so weit degradieren, dass die Wärmeleitfähigkeit in Through-plane-Richtung so weit sinkt, dass sie auf ein zu unter Verwendung von Bornitrid-Primärpartikeln hergestellten Polymercompounds vergleichbares Niveau abfällt.

Mit den anisotropen schuppenförmigen Bornitrid-Agglomeraten und mit den anisotropen nitridgebundenen Bornitrid-Agglomeraten ist die Wärmeleitfähigkeit in den erfindungsgemäßen Bornitrid-Polymer-Compounds nicht so stark richtungsabhängig wie in unter Verwendung von plättchenförmigen Bornitrid-Primärpartikeln hergestellten Bornitrid-Polymer-Compounds. Die anisotropen schuppenförmigen Bornitrid-Agglomerate und die anisotropen nitridgebundenen Bornitrid-Agglomerate haben eine so hohe Festigkeit, dass sie den Compoundierprozess mit einer Polymerschmelze in hoher Anzahl und Größe überstehen.

Mit den anisotropen nitridgebundenen Bornitrid-Agglomeraten kann mit dem erfindungsgemäßen Herstellverfahren überraschenderweise die Through-plane-Wärmeleitfähigkeit von Polymer-Bornitrid-Compounds bei einem Füllgrad von 30 Vol.-% um etwa das Doppelte und bei einem Füllgrad von 50 Vol.-% um etwa das Vierfache gegenüber dem Einsatz von nicht agglomeriertem plättchenförmigem Bornitrid und Verwendung von Standard-Spritzgussparametern gesteigert werden.

Mit den anisotropen nitridgebundenen Bornitrid-Agglomeraten kann mit dem erfindungsgemäßen Herstellverfahren überraschenderweise die Through-plane-Wärmeleitfähigkeit von 2 mm dünnen spritzgegossenen Platten bei einem Füllgrad von 30 Vol.-% um etwa 40 % und bei einem Füllgrad von 50 Vol.-% um etwa 100 % gegenüber der Verwendung von Standard-Spritzgussparametern gesteigert werden, insbesondere bei Verwendung von schonenden Compoundierparametern.

Die anisotropen schuppenförmigen Bornitrid-Agglomerate und die schuppenförmigen Bornitrid-Agglomerate mit anorganischer Bindephase sind stabil genug für die Anwendung in der Compoundierung und im Spritzguss von dünnen Platten einer Wandstärke von etwa 2 mm. Bei weiterer Reduzierung der Wandstärke von dünnen Platten, bei denen eine noch höhere Stabilität der Agglomerate erforderlich ist, kann durch die Erhöhung des Anteils an Bindephase in den schuppenförmigen Bornitrid-Agglomeraten mit anorganischer Bindephase eine Anpassung an die jeweiligen Stabilitätsanforderungen erfolgen.

Auch von Vorteil ist, dass durch die Einstellbarkeit bzw. die Erhöhung der Stabilität der schuppenförmigen Bornitrid-Agglomerate mit anorganischer Bindephase auch Mischungen mit abrasiven Sekundärfüllstoffen möglich sind. In Mischungen von Bornitrid-Agglomeraten mit abrasiven Sekundärfüllstoffen werden herkömmliche Bornitrid-Agglomerate degradiert. Bei den erfindungsgemäß eingesetzten Bornitrid-Agglomeraten ist die Degradation soweit reduziert, dass die vorteilhaften Wärmeleitungseigenschaften erhalten werden können.

Weiterhin ist von Vorteil, dass insbesondere bei hohen Füllstoffgehalten, bei denen die Schmelzviskosität in der thermoplastischen Verarbeitung hoch ist und damit eine hohe Scherung des Füllstoffs stattfindet, die Stabilität der schuppenförmigen Bornitrid-Agglomerate mit anorganischer Bindephase durch Erhöhung des Bindephasenanteils angepasst werden kann und damit eine Verarbeitung von hohen Füllstoffgehalten oder hohen Gehalten an Füllstoffgemischen ermöglicht wird.

Durch die Einstellbarkeit der Stabilität der anisotropen schuppenförmigen Bornitrid-Agglomerate und der schuppenförmigen Bornitrid-Agglomerate mit anorganischer Bindephase kann ein guter Kompromiss zwischen der Abrasivität des wärmeleitfähigen Füllstoffs und einer ausreichenden Stabilität für die jeweilige Anwendung erreicht werden.

Das erfindungsgemäße Bauteil und Polymer-Bornitrid-Compound kann in einer weiteren bevorzugten Ausführungsform neben Bornitrid in Form von plättchenförmigen hexagonalen Bornitrid-Partikeln oder Bornitrid-Agglomeraten als wärmeleitendem Füllstoff auch zusätzlich noch wenigstens einen von Bornitrid verschiedenen, die Wärmeleitfähigkeit erhöhenden Füllstoff enthalten. Diese zusätzlichen Füllstoffe werden im Folgenden auch als Sekundärfüllstoffe bezeichnet.

Die Wärmeleitfähigkeit solcher Sekundärfüllstoffe beträgt üblicherweise $\geq$ 5 W/m*K, vorzugsweise $\geq$ 8 W/m*K.

Der Gesamtanteil an Bornitrid in Form von Bornitrid-Agglomeraten oder plättchenförmigen hexagonalen Bornitrid-Partikeln und den Sekundärfüllstoffen im erfindungsgemäßen Bauteil und Polymer-Bornitrid-Compound beträgt vorzugsweise wenigstens 20 Vol.-%, weiter vorzugsweise wenigstens 30 Vol.-%, jeweils bezogen auf das Gesamtvolumen des Polymer-Bornitrid-Compounds. Vorzugsweise liegt der Gesamtanteil an Bornitrid in Form von Bornitrid-Agglomeraten oder plättchenförmigen hexagonalen Bornitrid-Partikeln und Sekundärfüllstoffen im erfindungsgemäßen Bauteil und Polymer-Bornitrid-Compound bei höchstens 70 Vol.-%, weiter vorzugsweise bei höchstens 60 Vol.-%, jeweils bezogen auf das Gesamtvolumen des Polymer-Bornitrid-Compounds. Besonders bevorzugt beträgt der Gesamtanteil an Bornitrid in Form von Bornitrid-Agglomeraten oder plättchenförmigen hexagonalen Bornitrid-Partikeln und Sekundärfüllstoffen im erfindungsgemäßen Bauteil und Polymer-Bornitrid-Compound höchstens 50 Vol.-%, jeweils bezogen auf das Gesamtvolumen des Polymer-Bornitrid-Compounds.

Als Sekundärfüllstoffe können Metallpulver und Legierungen, vorzugsweise gewählt aus der Gruppe umfassend Aluminium-, Silizium-, Titan-, Kupfer-, Eisen- und Bronzepulver und Mischungen davon, eingesetzt werden.

Es kann auch Kohlenstoff in Form von Graphit, expandiertem Graphit, Graphen oder Ruß als Sekundärfüllstoff eingesetzt werden, wobei expandierter Graphit besonders bevorzugt ist.

Weiterhin können auch keramische Füllstoffe wie Oxide, Nitride und Carbide als Sekundärfüllstoffe eingesetzt werden, vorzugsweise ausgewählt aus der Gruppe umfassend Aluminiumoxid, Magnesiumoxid, Aluminiumnitrid, Siliziumdioxid, Siliziumcarbid, Siliziumnitrid und Mischungen davon, besonders bevorzugt Aluminiumoxid, Magnesiumoxid und/oder Aluminiumnitrid.

Als Sekundärfüllstoffe können auch mineralische Füllstoffe eingesetzt werden, vorzugsweise ausgewählt aus der Gruppe umfassend Alumosilikate, Aluminiumsilikate, Magnesiumsilikat ($2MgO*SiO_2$), Magnesiumaluminat ($MgO*Al_2O_3$), Brucit (Magnesiumhydroxid, $Mg(OH)_2$), Quarz, Cristobalit und Mischungen davon. Als Alumosilikate bzw. Aluminiumsilikate können beispielsweise Kyanit ($Al_2SiO_5$) und/oder Mullit ($3Al_2O_3*2SiO_2$) eingesetzt werden.

Auch Kombinationen von Sekundärfüllstoffe sind möglich. Eine Kombination von anisotropen nitridgebundenen Bornitrid-Agglomeraten, Alumosilikat und expandiertem Graphit als wärmeleitende Füllstoffe hat sich im erfindungsgemäßen Bauteil und Polymer-Bornitrid-Compound als besonders vorteilhaft erwiesen.

Die Sekundärfüllstoffe liegen bevorzugt partikelförmig vor. Die Sekundärfüllstoff-Partikel können in ihrer Form unregelmäßig, brockig oder sphärisch oder plättchenförmig vorliegen. Der Anteil an plättchenförmigen Sekundärfüllstoffen im erfindungsgemäßen Bauteil und Polymer-Bornitrid-Compound beträgt vorzugsweise nicht mehr als 10 Vol.-%, weiter vorzugsweise nicht mehr als 5 Vol.-%.

Die Sekundärfüllstoffe haben bevorzugt einen Partikeldurchmesser oder Plättchendurchmesser von $\geq 0,5$ µm, weiter bevorzugt von $\geq 1$ µm, weiter bevorzugt von $\geq 2$ µm und besonders bevorzugt von $\geq 5$ µm.

Der Sekundärfüllstoff liegt als Pulver vor, bevorzugt als agglomeriertes Pulver. Die Agglomerierung des Sekundärfüllstoffs kann über Walzenkompaktierung oder über Aufbaugranulierung beispielsweise im Eirichmischer erfolgen. Als Granulierungsmittel kann dabei eine PVA-Lösung verwendet werden. Vorzugsweise wird das Sekundärfüllstoffgranulat vor der Dosierung bei der Compoundierung im Extruder mit dem Bornitrid-Füllstoff abgemischt. Vor der Abmischung des Sekundärfüllstoffgranulats mit dem Bornitrid-Füllstoff wird das Sekundärfüllstoffgranulat getrocknet. Die Granulation des Sekundärfüllstoffs unterstützt die gleichmäßige Dosierung bei der Compoundierung.

Vorzugsweise werden bei Verwendung von Füllstoffkombinationen von Bornitrid-Agglomeraten bzw. Bornitrid-Primärpartikeln und Sekundärfüllstoffen die anisotropen schuppenförmigen Bornitrid-Agglomerate in Kombination mit Sekundärfüllstoffen eingesetzt.

Die Wärmeleitfähigkeit der erfindungsgemäßen Bauteile und Polymer-Bornitrid-Compounds mit Füllstoffkombinationen von schuppenförmigen Bornitrid-Agglomeraten und Sekundärfüllstoffen ist höher als die von allein unter Verwendung der Sekundärfüllstoffe hergestellten Polymer-Compounds, jeweils bei gleichem Gesamt-Volumenanteil an Füllstoffen.

Bei der Kombination von schuppenförmigen Bornitrid-Agglomeraten mit den Sekundärfüllstoffen zeigt sich überraschenderweise, dass die erzielten Wärmeleitfähigkeitswerte der mit den Füllstoffkombinationen hergestellten erfindungsgemäßen Polymer-Bornitrid-Compounds höher sind als zu erwarten gewesen wäre, wenn man die Wärmeleitfähigkeitswerte für die mit den entsprechenden Anteilen der Bornitrid-Agglomerate und Sekundärfüllstoffe jeweils einzeln gefüllten Polymerwerkstoffe, jeweils abzüglich der Wärmeleitfähigkeit des ungefüllten Basispolymers, addiert. Dies trifft sowohl für die In-plane- als auch für die Through-plane-Wärmeleitfähigkeit zu.

Die erfindungsgemäßen Bauteile und Polymer-Bornitrid-Compounds können neben den bevorzugt eingesetzten schuppenförmigen Bornitrid-Agglomeraten zusätzlich noch Bornitrid-Primärpartikel enthalten. Bei den unter Verwendung von Füllstoffkombinationen von Bornitrid-Agglomeraten und Sekundärfüllstoffen hergestellten Polymer-Bornitrid-Compounds können ebenfalls zusätzlich noch Bornitrid-Primärpartikel zugesetzt werden. Als Bornitrid-Primärpartikel können dabei Bornitrid-Pulver eingesetzt werden, aber auch wenig stabile Bornitrid-Agglomerate wie beispielsweise sprühgetrocknete Bornitrid-Agglomerate, die beim Compoundieren weitgehend oder ganz zu Primärpartikeln degradiert werden. Der Anteil an zusätzlichen Bornitrid-Primärpartikeln im erfindungsgemäßen Polymer-Bornitrid-Compound beträgt vorzugsweise $\leq 20$ Vol.-%, besonders bevorzugt $\leq 10$ Vol.-%.

Die erfindungsgemäßen Bauteile und Polymer-Bornitrid-Compounds können neben den Bornitrid-Agglomeraten bzw. neben den Bornitrid-Agglomeraten und Sekundärfüllstoffen mit einer Wärmeleitfähigkeit von $\geq 5$ W/m*K auch weitere von Bornitrid verschiedene Füllstoffe mit einer geringeren Wärmeleitfähigkeit von < 5 W/m*K wie beispielsweise Talk enthalten.

Die erfindungsgemäßen Bauteile und Polymer-Bornitrid-Compounds können neben den wärmeleitenden Füllstoffen auch noch zusätzliche Additive und Füllstoffe enthalten, die andere Funktionen wie etwa die Anpassung der mechanischen oder elektrischen Eigenschaften oder des Wärmeausdehnungskoeffizienten übernehmen. Die Füllstoffe können dabei beispielsweise als brockige, sphärische, plättchenförmige, faserförmige oder als Partikel mit regelloser Morphologie vorliegen.

Als zusätzliche Füllstoffe in den erfindungsgemäßen Bauteilen und Polymer-Bornitrid-Compounds können insbesondere Glasfasern eingesetzt werden, um die mechanischen Eigenschaften, insbesondere die Festigkeit zu verbessern. Hierbei können handelsübliche Glasfasern zur Verstärkung von thermoplastischen Polymeren eingesetzt werden. Die Glasfasern können auch Oberflächenmodifizierungsmittel enthalten. Der Durchmesser der Glasfasern kann beispielsweise 14 µm, die Länge der Glasfasern kann beispielsweise 4,5 mm betragen. Auch andere Durchmesser und Längen sind möglich. Als Oberflächenmodifizierung kann eine Silanisierung erfolgen, auch andere Oberflächenmodifizierungen sind möglich.

Der Gehalt an Glasfasern in den Polymer-Bornitrid-Compounds beträgt vorzugsweise 5 - 40 Vol.-%.

Zur Herstellung der erfindungsgemäßen Bauteile und Polymer-Bornitrid-Compounds können auch Mischungen unterschiedlicher Fraktionen von anisotropen schuppenförmigen Bornitrid-Agglomeraten eingesetzt werden.

Die erfindungsgemäßen Polymer-Bornitrid-Compounds können durch Compoundierung mit allen gängigen Compoundieraggregaten hergestellt werden. Hierzu gehören unter anderem Einschneckenextruder, Doppelschneckenextruder, tangierend oder dichtkämmend, gleich oder gegenläufig, Planetenwalzenextruder, Nutbuchsenextruder, Stiftextruder, Kalandrieren, Buss Ko-Kneter, Scherwalzenextruder und Spritzgussmaschinen. Die Compoundierung im Doppelschneckenextruder ist bevorzugt.

Das zur Compoundierung eingesetzte Polymer kann in Pulverform oder als Granulat vorliegen. Das Polymer kann mit den Bornitrid-Agglomeraten oder den Bornitrid-Agglomeraten und weiteren Füllstoffen trocken vorgemischt werden, bevor die Mischung einem Compoundieraggregat zugeführt wird. Alternativ dazu kann die Zugabe der Bornitrid-Agglomerate und gegebenenfalls weiterer Füllstoffe über Seitendosierungen in die Polymerschmelze erfolgen, ohne dass die Füllstoffe zuvor mit dem Polymer vorgemischt werden. Weiterhin können Masterbatches, also Polymercompounds mit hohem Füllstoffgehalt, hergestellt werden und Granulatgemische der Masterbatches in einer Spritzgussmaschine spritzgegossen werden.

Die Compoundierung der erfindungsgemäßen Polymer-Bornitrid-Compounds erfolgt vorzugsweise unter möglichst schonenden Bedingungen. Vorzugsweise sollten höchstens 50 % der maximalen Fördermenge des Extruders eingestellt werden. Die Schneckendrehzahl sollte vorzugsweise höchstens 300 U/min betragen. Nach der Zudosierung der Bornitrid-Agglomerate über eine Seitendosierung sollten vorzugsweise nur Förderelemente und Mischelemente, aber keine Knetblöcke, Scherelemente oder Rückstauelemente in den Schnecken des Doppelschneckenextruders eingebaut sein.

Nach der Homogenisierung im Compoundieraggregat wird die gefüllte Polymerschmelze granuliert. Die Granulation des Polymer-Bornitrid-Compounds kann beispielsweise durch Stranggranulation, Unterwassergranulation, Heißabschlag oder Kaltabschlag erfolgen. Auch eine Kombination der Verfahren zur Verarbeitung des Compounds ist möglich. Das erhaltene Polymer-Bornitrid-Compound in Granulatform kann über Formgebungsverfahren wie beispielsweise Spritzguss zu Bauteilen weiterverarbeitet werden.

Die erfindungsgemäßen Bauteile werden durch thermoplastische Verarbeitung der Polymer-Bornitrid-Compounds hergestellt. Die Polymer-Bornitrid-Compounds können durch Spritzgießen, Extrudieren, Kalandrieren oder Spritzprägen in jede beliebige Form gebracht werden, vorzugsweise durch Spritzgießen oder Extrudieren. Die Verarbeitung über Spritzguss ist besonders bevorzugt. Hierzu kann beispielsweise das Compound-Granulat oder Compoundgranulat-Gemisch aus Masterbatches in einer hydraulisch oder elektromechanisch angetriebenen Plastifiziereinheit aufgeschmolzen und, gegebenenfalls noch mit weiteren zusätzlichen Füllstoffen oder Polymeren, bis zum Austritt aus der Düse homogenisiert werden. Anschließend kann die Schmelze während der Einspritzphase in das geschlossene Werkzeug einer Spritzgussanlage eingespritzt werden. Hierbei können sowohl klassische Spritzgießwerkzeuge als auch Werkzeuge mit Heißkanalsystemen zum Einsatz kommen. Nach vollständiger Füllung der Kavität kann der Nachdruck bis zur vollständigen Erstarrung des Bauteils konstant gehalten werden. Nach Ablauf der Kühlzeit kann das Werkzeug geöffnet und das Bauteil ausgestoßen werden. Das Auswerfen kann wiederum über die Auswerfereinheit der Spritzgussmaschine oder über andere Entnahmemöglichkeiten wie Roboterarme erfolgen.

Die erfindungsgemäßen Bauteile werden, wie oben ausgeführt, durch ein Verfahren umfassend den Verfahrensschritt des Spritzgießens mittels eines Spritzgusswerkzeugs in einer Spritzgussmaschine unter Verwendung eines erfindungsgemäßen Polymer-Bornitrid-Compounds hergestellt, wobei die Einspritzgeschwindigkeit ≤ 160 cm$^3$/s beträgt. Vorzugsweise beträgt die Einspritzgeschwindigkeit ≤ 135 cm$^3$/s und insbesondere vorzugsweise ≤ 115 cm$^3$/s.

Für Polymer-Bornitrid-Compounds, die keine Glasfasern enthalten und deren Through-plane-Wärmeleitfähigkeit im mittelwärmeleitfähigen Bereich liegt, d.h. im Bereich von 1 bis < 2,5 W/m*K, beträgt die Einspritzgeschwindigkeit ≤ 160 cm$^3$/s, vorzugsweise ≤ 135 cm$^3$/s, weiter vorzugsweise ≤ 115 cm$^3$/s, weiter vorzugsweise ≤ 100 cm$^3$/s, weiter vorzugsweise ≤ 75 cm$^3$/s, weiter vorzugsweise ≤ 60 cm$^3$/s und insbesondere vorzugsweise ≤ 55 cm$^3$/s.

Für Polymer-Bornitrid-Compounds, die keine Glasfasern enthalten und deren Through-plane-Wärmeleitfähigkeit im Bereich von 1 bis < 2,5 W/m*K liegt, wird als Massetemperatur der Compoundschmelze in der Spritzgussmaschine vorzugsweise eine Temperatur gewählt, die wenigstens 10 °C, weiter vorzugsweise wenigstens 20 °C und insbesondere vorzugsweise wenigstens 30 °C oberhalb der Schmelztemperatur des Polymerwerkstoffs ohne wärmeleitenden Füllstoff liegt. Die Massetemperatur der Compoundschmelze in der Spritzgussmaschine liegt vorzugsweise höchstens 60 °C, weiter bevorzugt höchstens 50 °C und insbesondere bevorzugt höchstens 40 °C oberhalb der Schmelztemperatur des Polymerwerkstoffs ohne wärmeleitenden Füllstoff.

Die Werkzeugtemperatur des Spritzgusswerkzeugs wird für Compounds, die keine Glasfasern enthalten und eine Wärmeleitfähigkeit von 1 W/m*K bis zu < 2,5 W/m*K aufweisen, vorzugsweise so eingestellt, dass sie mindestens 30 °C, weiter vorzugsweise mindestens 60 °C und insbesondere bevorzugt mindestens 90 °C unterhalb der bei 0,45 MPa gemäß DIN EN ISO 75-1/-2 gemessenen Formbeständigkeitstemperatur des Polymerwerkstoffs ohne wärmeleitenden Füllstoff liegt. Die Werkzeugtemperatur des Spritzgusswerkzeugs liegt vorzugsweise höchstens 120 °C und insbesondere bevorzugt höchstens 100 °C unterhalb der bei 0,45 MPa gemäß DIN EN ISO 75-1/-2 gemessenen Formbeständigkeitstemperatur des Polymerwerkstoffs ohne wärmeleitenden Füllstoff.

So liegt beispielsweise bei einem glasfaserfreien Compound mit einem niedrigviskosen Polyamid 6 und einer Wärmeleitfähigkeit von 1 W/m*K bis zu < 2,5 W/m*K die Massetemperatur der Compoundschmelze in der Spritzgussmaschine bevorzugt bei mindestens 229 °C, weiter bevorzugt bei mindestens 239° C, weiter bevorzugt bei mindestens 249 °C. Weiterhin liegt die Massetemperatur der Compoundschmelze mit Polyamid 6 bevorzugt bei höchstens 279 °C, weiter bevorzugt bei höchstens 269 °C, weiter bevorzugt bei höchstens 259 °C. Die Werkzeugtemperatur des Spritzgusswerkzeugs liegt dabei bevorzugt bei höchstens 160° C, weiter bevorzugt bei höchstens 130 °C, weiter bevorzugt bei höchstens 110 °C, und sie liegt bevorzugt bei mindestens 70 °C, weiter bevorzugt bei mindestens 90 °C. Polyamid 6 hat einen Schmelzpunkt von 219 °C, die gemäß DIN EN ISO 75-1/-2 bei 0,45 MPa gemessene Formbeständigkeitstemperatur des Polyamid 6 beträgt 190 °C.

Für Polymer-Bornitrid-Compounds, die keine Glasfasern enthalten und deren Through-plane-Wärmeleitfähigkeit im hochwärmeleitfähigen Bereich von ≥ 2,5 W/mK liegt, beträgt die Einspritzgeschwindigkeit beim Spritzgießen ≤ 160 cm$^3$/s, vorzugsweise ≤ 135 cm$^3$/s, weiter vorzugsweise ≤ 115 cm$^3$/s, weiter vorzugsweise ≤ 100 cm$^3$/s, weiter vorzugsweise ≤ 75 cm$^3$/s, weiter vorzugsweise ≤ 60 cm$^3$/s und insbesondere vorzugsweise ≤ 55 cm$^3$/s.

Für Polymer-Bornitrid-Compounds, die keine Glasfasern enthalten und deren Through-plane-Wärmeleitfähigkeit im hochwärmeleitfähigen Bereich von ≥ 2,5 W/m*K liegt, wird als Massetemperatur der Compoundschmelze in der Spritzgussmaschine vorzugsweise eine Temperatur gewählt, die wenigstens 10 °C, weiter vorzugsweise wenigestens 20 °C oberhalb der Schmelztemperatur des Polymerwerkstoffs ohne wärmeleitenden Füllstoff liegt. Die Massetemperatur der Compoundschmelze in der Spritzgussmaschine liegt vorzugsweise höchstens 60 °C, weiter bevorzugt höchstens 50 °C und, weiter bevorzugt höchstens 40 °C und insbesondere bevorzugt höchstens 35 °C oberhalb der Schmelztemperatur des Polymerwerkstoffs ohne wärmeleitenden Füllstoff.

Die Werkzeugtemperatur des Spritzgusswerkzeugs wird für Compounds, die keine Glasfasern enthalten und eine Wärmeleitfähigkeit von ≥ 2,5 W/m*K aufweisen, vorzugsweise so eingestellt, dass sie mindestens 5 °C, weiter vorzugsweise mindestens 10 °C unterhalb der bei 0,45 MPa gemäß DIN EN ISO 75-1/-2 gemessenen Formbeständigkeitstemperatur des Polymerwerkstoffs ohne wärmeleitenden Füllstoff liegt. Die Werkzeugtemperatur des Spritzgusswerkzeugs liegt vorzugsweise höchstens 70 °C, weiter vorzugsweise höchstens 50 °C und insbesondere bevorzugt höchstens 40 °C unterhalb der bei 0,45 MPa gemäß DIN EN ISO 75-1/-2 gemessenen Formbeständigkeitstemperatur des Polymerwerkstoffs ohne wärmeleitenden Füllstoff.

So liegt beispielsweise bei einem glasfaserfreien Compound mit einem niedrigviskosen Polyamid 6 und einer Wärmeleitfähigkeit von ≥ 2,5 W/m*K die Massetemperatur der Compoundschmelze in der Spritzgussmaschine bevorzugt bei mindestens 229 °C, weiter bevorzugt bei mindestens 239° C. Weiterhin liegt die Massetemperatur der Compoundschmelze mit Polyamid 6 bevorzugt bei maximal 279 °C, weiter bevorzugt bei maximal 269 °C, weiter bevorzugt bei maximal bei 254 °C. Die Werkzeugtemperatur des Spritzgusswerkzeugs liegt dabei bevorzugt bei höchstens 185 °C und weiter bevorzugt bei höchstens 180 °C, und sie liegt bevorzugt bei mindestens 120 °C, weiter bevorzugt bei mindestens 140 °C, insbesondere bevorzugt bei mindestens 150 °C.

Für Polymer-Bornitrid-Compounds, die keine Glasfasern enthalten, kann zunächst eine Vorprobe zur Ermittlung des Through-plane-Wärmeleitfähigkeitsbereichs hergestellt werden.

Die Herstellung der Vorprobe zur Ermittlung des Through-plane-Wärmeleitfähigkeitsbereichs von glasfaserfreien Polymer-Bornitrid-Compounds erfolgt vorzugsweise in den folgenden Schritten:

1) Herstellung von Masterbatches

a) Es wird ein Polymercompound enthaltend Bornitrid-Agglomerate als Füllstoff als Masterbatch hergestellt. Die Füllstoffkonzentration im Masterbatch beträgt bis zu 50 Vol.-% und kann bei besonders niedrigviskosen Polymeren auch höher liegen. Die Compoundierung erfolgt unter Verwendung des für das jeweilige Polymer vom Hersteller empfohlenen Temperaturprofils. Die Compoundierung erfolgt im Doppelschneckenextruder mit einer Seitendosierung für den Füllstoff.
In der Schneckenkonfiguration des Doppelschneckenextruders werden ab dem Bereich der Zudosierung des Füllstoffs nur Förder- und Mischelemente eingesetzt, damit der Füllstoff möglichst geringe Scherung bis zum Austrag aus dem Doppelschneckenextruder erfährt. Bei der Compoundierung werden höchstens 50% der maximalen Fördermenge des Extruders eingestellt. Als Schneckendrehzahl werden 300 U/min eingestellt. Die Granulation kann im Heißabschlag, unter Wasser oder nach einem Wasserbad im Häcksler erfolgen.

b) Werden Glasfasern zur Verbesserung der mechanischen Eigenschaften eingesetzt, so wird ein Masterbatch für den Füllstoff Glasfasern hergestellt, entsprechend der unter a) für den Füllstoff Bornitrid-Agglomerate beschriebenen Vorgehensweise.

c) Werden neben Bornitrid-Agglomeraten und den gegebenenfalls enthaltenen Glasfasern noch weitere Füllstoffe eingesetzt, so werden für diese Füllstoffe weitere Masterbatches gemäß der unter a) beschriebenen Vorgehensweise hergestellt.

2) Herstellung eines Granulatgemisches

Die in Schritt 1) hergestellten Masterbatches werden miteinander im Verhältnis der gewünschten Zusammensetzung homogenisiert, indem sie im Taumelmischer 2 Minuten gemischt werden. Die Menge der hergestellten Mischung liegt bei maximal 5 kg.

3) Spritzguss

Das Granulatgemisch wird in einer Spritzgussmaschine mit den oben aufgeführten Parametern für hochwärmeleitfähige Compounds zu 2 mm dünnen Platten spritzgegossen.

4) Wärmeleitfähigkeitsmessung

Aus der Mitte der Spritzgussplatte wird eine 2*10*10 mm$^3$ Probe präpariert. Die Messung der Through-plane-Wärmeleitfähigkeit erfolgt an dieser Probe mit der Flashmethode, gemäß DIN EN ISO 22007-4.

Für Polymer-Bornitrid-Compounds, die zur Verbesserung der mechanischen Eigenschaften zusätzlich Glasfasern enthalten, beträgt die Einspritzgeschwindigkeit beim Spritzgießen $\leq$ 160 cm$^3$/s, vorzugsweise $\leq$ 135 cm$^3$/s und besonders bevorzugt $\leq$ 115 cm$^3$/s. Die Einspritzgeschwindigkeit liegt für glasfaserhaltige Polymer-Bornitrid-Compounds vorzugsweise bei wenigstens 35 cm$^3$/s, weiter vorzugsweise bei wenigstens 55 cm$^3$/s.

Für Polymer-Bornitrid-Compounds, die zur Verbesserung der mechanischen Eigenschaften zusätzlich Glasfasern enthalten, wird als Massetemperatur der Compoundschmelze in der Spritzgussmaschine vorzugsweise eine Temperatur gewählt, die wenigstens 10 °C, weiter bevorzugt wenigstens 20 °C und insbesondere bevorzugt wenigstens 30 °C oberhalb der Schmelztemperatur des Polymerwerkstoffs ohne wärmeleitenden Füllstoff liegt. Die Massetemperatur der Compoundschmelze in der Spritzgussmaschine liegt vorzugsweise höchstens 60 °C, weiter bevorzugt höchstens 55 °C oberhalb der Schmelztemperatur des Polymerwerkstoffs ohne wärmeleitenden Füllstoff.

Die Werkzeugtemperatur des Spritzgusswerkzeugs wird für glasfaserhaltige Compounds vorzugsweise so eingestellt, dass sie mindestens 5 °C, weiter bevorzugt mindestens 10 °C unterhalb der bei 0,45 MPa gemäß DIN EN ISO 75-1/-2 gemessenen Formbeständigkeitstemperatur des Polymerwerkstoffs ohne wärmeleitenden Füllstoff liegt. Die Werkzeugtemperatur des Spritzgusswerkzeugs liegt bevorzugt höchstens 40 °C, weiter bevorzugt höchstens 30 °C und insbesondere bevorzugt höchstens 25 °C unterhalb der bei 0,45 MPa gemäß DIN EN ISO 75-1/-2 gemessenen Formbeständigkeitstemperatur des Polymerwerkstoffs ohne wärmeleitenden Füllstoff.

So liegt beispielsweise bei einem glasfaserhaltigen Compound mit einem niedrigviskosen Polyamid 6 die Massetemperatur der Compoundschmelze in der Spritzgussmaschine bevorzugt bei mindestens 229 °C, weiter bevorzugt bei mindestens 239° C, weiter bevorzugt bei mindestens 249 °C. Weiterhin liegt die Massetemperatur der Compoundschmelze mit Polyamid 6 bevorzugt bei höchstens 279 °C, weiter bevorzugt bei höchstens 274 °C. Die Werkzeugtemperatur des Spritzgusswerkzeugs liegt dabei bevorzugt bei höchstens 185° C, weiter bevorzugt bei höchstens 180° C, und sie liegt bevorzugt bei mindestens 150°C, weiter bevorzugt bei mindestens 160°C und insbesondere bevorzugt bei mindestens 165 °C.

Mit dem erfindungsgemäßen Herstellverfahren können Through-plane-Wärmeleitfähigkeitswerte von bis zu 5 W/m*K und mehr erhalten werden.

Überraschenderweise konnten für mittel- und hochwärmeleitfähige Compounds mit einer Through-plane-Wärmeleitfähigkeit von 1 bis < 2,5 W/m*K bzw. von $\geq$ 2,5 W/m*K Spritzgussparameter gefunden werden, bei denen die Degradation der erfindungsgemäß bevorzugt eingesetzten schuppenförmigen Bornitrid-Agglomerate gering ist und zusätzlich eine besonders ausgeprägte Orientierung in Through-plane-Richtung erfolgt. Dadurch erhöht sich die Through-plane-Wärmeleitfähigkeit signifikant um bis zu mehr als 100 % gegenüber Spritzgussteilen, die über Verwendung von üblichen Standardparametern im Spritzguss hergestellt wurden.

Die erfindungsgemäßen Bauteile werden zur Wärmeabfuhr von zu kühlenden Komponenten oder Baugruppen verwendet, vorzugsweise von elektronischen Komponenten oder Baugruppen.

Die erfindungsgemäßen Bauteile enthalten dünnwandige Bestandteile, durch die Wärme von zu kühlenden Komponenten oder Baugruppen abgeführt werden kann. Die dünnwandigen Teile des Bauteils haben eine Dicke von $\leq$ 3 mm, vorzugsweise von $\leq$ 2 mm. Das erfindungsgemäße Bauteil kann beispielsweise als dünne Platte einer Stärke von $\leq$ 3 mm, vorzugsweise von $\leq$ 2 mm vorliegen, die beispielsweise mittels Spritzguss oder Extrusion als Formgebungsmethode hergestellt werden kann. Die erfindungsgemäßen Bauteile können elektrisch leitfähig oder elektrisch isolierend sein. Es ist auch möglich, während der Formgebung oder in einem nachfolgenden Verarbeitungsschritt ein Laminat aus leitfähigen und nicht leitfähigen Schichten in Form einer dünnen Platte zu erzeugen, wobei zumindest die elektrisch isolierende Schicht der dünnen Platte unter Verwendung des erfindungsgemäßen Polymer-Bornitrid-Compounds hergestellt wurde.

Das erfindungsgemäße Bauteil kann nach der beispielsweise mittels Spritzguss erfolgten Formgebung mit einer Beschichtung versehen werden, beispielsweise kann eine Metallisierung durchgeführt werden. Es können auch Leiterbahnen appliziert werden.

Das erfindungsgemäße Bauteil kann als ebene oder geschwungene Platte mit einheitlicher oder uneinheitlicher Wandstärke vorliegen. Die Oberfläche des erfindungsgemäßen Bauteils kann eben oder strukturiert vorliegen.

Das erfindungsgemäße Bauteil kann als Trägerplatte für Elektronikkomponenten dienen, oder Wärme von einem Bauteil auf ein anderes übertragen. Das erfindungsgemäße Bauteil kann auch als Folie oder als dünnwandiges Rohr vorliegen.

Das erfindungsgemäße Bauteil kann auch als dünnwandiger wesentlicher Bestandteil eines überwiegend dünnwandigen Gehäuses, einer Halterung oder eines Verbindungselements oder eines Rohres vorliegen. Weiterhin kann das erfindungsgemäße Bauteil als Kühlrippe als Bestandteil eines Kühlkörpers, eines Gehäuses, einer Halterung, eines Verbindungselements oder Rohrs vorliegen, wobei die Halterung beispielsweise ein Lampensockel sein kann. Das erfindungsgemäße Bauteil kann in komplexeren Bauteilen als Platte Bestandteil eines Plattenstapels sein, wobei die Platte im Plattenstapel als Kühlrippe dienen kann.

Beispiele und Referenzbeispiele

Für die Compoundierung der Polymere mit den Bornitrid-Agglomeraten oder Füllstoffgemischen wird ein Doppelschneckenextruder ZSE 18 maxx (Leistritz, Nürnberg, Deutschland) verwendet. Es werden zwei verschiedene Schneckenkonfigurationen eingesetzt, zum einen die vergleichsweise schroffe Schneckenkonfiguration "standard" mit zwei Mischelementen und sechs Knetblöcken (Schneckenkonfiguration 1), zum anderen die schonendere Schneckenkonfiguration "soft" mit drei Mischelementen und ohne Knetblock (Schneckenkonfiguration 2). Als Schneckendrehzahlen werden 300 U/min sowie 900 U/min eingestellt. Als Polymer wird ein Polyamid PA 6 (Schulamid® 6 NV 12) verwendet. Bei der Compoundierung wird die Polymerschmelze auf 265°C temperiert. Der Durchsatz wird in allen Versuchen auf 6 kg/h eingestellt. Das Polymer wird über die Hauptdosierung zugeführt. Der Füllstoff (Bornitrid-Agglomerate) oder das Füllstoffgemisch (Bornitrid-Agglomerate und Sekundärfüllstoffe) wird über eine Seitendosierung zugeführt.

Die füllstoffhaltige Polymerschmelze wird durch zwei 3 mm Düsen ausgetragen, in Form von Strängen abgekühlt und in einem Häcksler zu Granulat verarbeitet. Aus den Granulaten werden über Spritzgießen 2 mm dünnen Platten mit einer Grundfläche von 80x80 mm$^2$ hergestellt.

Beim Spritzguß der 2 mm dicken Platten ist der Anguss über die ganze Probenbreite gezogen. Er sollte eine Dicke von 1 - 1,8 mm, vorzugsweise von 1,3 - 1,7 mm haben. In den nachfolgenden Beispielen beträgt die Dicke des Angusses 1,3 mm.

Beispiel 1:

Beispiel 1 a):

Es werden 4000 g Aluminiumpaste STAPA ALUPOR SK 1-NE/70 (Fa. Eckart, Hartenstein, Deutschland) und 7000 g Bornitrid-Pulver BORONID® S1-SF (ESK Ceramics GmbH & Co. KG, Deutschland; mittlere Partikelgröße $d_{50}$ = 3 $\mu$m, gemessen mittels Laserbeugung (Mastersizer 2000, Malvern, Naßmessung)) in einem PE-Fass auf dem Rollenbock mit Mahlkugeln für 20 Stunden homogenisiert. Das Pulvergemisch wird über eine gravimetrische Dosierung mit 8 kg/h in einen Walzenkompaktierer RC 250*250 (Powtec, Remscheid, Deutschland) dosiert. Der Walzenkompaktierer ist so modifiziert, dass die glatten Edelstahlwalzen ohne Produktaufgabe auf Kontakt laufen. Es wird eine Anpresskraft von 75 kN auf die Walzen ausgeübt, was 3 kN/cm Walzspaltlänge entspricht und eine Walzendrehzahl von 20 U/min eingestellt. Es entstehen Bornitrid-Hybrid-Flakes mit einer Dicke von 30 $\mu$m und bis zu mehreren Zentimetern Durchmesser. An den Walzen klebende grüne (d.h. kompaktierte, aber noch nicht temperaturbehandelte) Bornitrid-Hybrid-Flakes werden durch einen Schaber abgezogen. Der Feinanteil < 200 $\mu$m wird nach der Kompaktierung abgesiebt und in der nächsten Rohstoffhomogenisierung mit 4000 g Aluminiumpaste und 7000 g Bornitrid-Pulver S1 im PE-Fass zugeführt. Der Vorgang wird so lange wiederholt, bis in der Summe 55 kg Bornitrid-Hybrid-Flakes erzeugt wurden. Die Bornitrid-Hybrid-Flakes werden unter Luftabschluss in einer Atmosphäre aus 80 % Stickstoff und 20 % Argon bei 300 °C entbindert und der Aluminiumanteil in den Bornitrid-Hybrid-Flakes wird bei 800 °C in einer Atmosphäre aus 80 % Stickstoff und 20 % Argon während einer Haltezeit von 5 Stunden weitestgehend in AIN umgewandelt. Anschließend erfolgt eine Hochtemperaturglühung bei 2050 °C für 2 Stunden in einer Atmosphäre von 80 % Stickstoff und 20 % Argon.

Nach der Glühung beträgt der Aluminiumanteil insgesamt in den Bornitrid-Hybrid-Flakes 24,6 Gew.-% gemessen mittels alkalischem Schmelzaufschluss und ICP-OES (Arcos, Spectro, Kleve, Deutschland). Rechnerisch ergibt sich aus dem Aluminiumanteil ein Aluminiumnitridanteil im Bornitrid-Hybrid-Flake von 37 Gew.-%.

Der Aluminium-frei-Gehalt beträgt 0,35 Gew.-%. Der Aluminium- frei-Gehalt wird gemessen mittels Extraktion mit 2-molarer HCl für 16 h bei Raumtemperatur. An dem klaren Überstand aus der Extraktion wird der Aluminiumgehalt der Lösung mit ICP-OES (Arcos, Spectro, Kleve, Deutschland) bestimmt. Der Kohlenstoffgehalt beträgt 0,05%, er wird indirekt gemessen mittels Verbrennung in Sauerstoff im Induktionsofen und anschließender IR-Messung von $CO_2$ (CS200, LECO, Mönchengladbach, Deutschland).

Die spezifische Oberfläche wird gemäß ISO 18757 mittels Stickstoffadsorption und der 5-Punkt-BET-Methode an dem Gerät SA3100 (Coulter, USA) gemessen. Die Probe wird vor der Messung bei 300°C, 360 min in Vakuum ausgeheizt. Die spezifische Oberfläche beträgt 6,8 m$^2$/g.

Der Sauerstoffgehalt wird indirekt mittels Trägergasheißextraktion gemessen, wobei der Sauerstoff aus der Probe mit Kohlenstoff umgesetzt wird und der Gehalt an entstehendem $CO_2$ mit IR-Spektroskopie (TCH 600, LECO, Mönchengladbach, Deutschland) ermittelt wird. Der Sauerstoffgehalt beträgt 0,15%.

Röntgenographisch können nur die Phasen Bornitrid und Aluminiumnitrid nachgewiesen werden.

Die Bornitrid-Hybrid-Flakes werden in einem Schwingsieb mit Gummikugeln siebgebrochen. Dabei werden Siebe in der Reihenfolge 5 mm, 2 mm, 1 mm, 500 $\mu$m eingesetzt.

Die erhaltenen Bornitrid-Hybrid-Flakes in der Siebfraktion < 500 $\mu$m haben eine mittlere Partikelgröße ($d_{50}$) von 192 $\mu$m, gemessen mittels Laserbeugung (Mastersizer 2000, Malvern, Naßmessung). Die Dicke der Bornitrid-Hybrid-Flakes beträgt 30 $\mu$m. Die Dicke wird mit einer Präzisions-Digital-Messuhr ermittelt.

Der Texturindex, gemessen an einer Schüttung der Bornitrid-Hybrid-Flakes, beträgt 20,6.

Aus den hergestellten Bornitrid-Hybrid-Flakes wird eine Fraktion < 200 $\mu$m gebrochen und der Feinanteil < 100 $\mu$m durch Siebung abgetrennt. An der so erhaltenen Siebfraktion 100 - 200 $\mu$m der Bornitrid-Hybrid-Flakes wird die Agglomeratstabilität mit der Ultraschallmethode bestimmt. Die an den Bornitrid-Hybrid-Flakes ermittelte Agglomeratstabilität beträgt 75 %.

An der REM-Übersichtsaufnahme der hergestellten Bornitrid-Hybrid-Flakes Agglomerate in der Siebfraktion < 500 $\mu$m (Figur 3 a) sind die ebenen Oberflächen der Agglomerate deutlich zu sehen. Bei diesen Oberflächen handelt es sich um Formgebungsflächen, die durch das Formgebungsverfahren (Verpressen zwischen zwei sich drehenden gegenläufigen Walzen) unmittelbar erzeugt wurden und nicht durch nachfolgende Zerkleinerung entstanden sind. Figur 3 b zeigt eine Bruchfläche eines Agglomerats mit einer Dicke von 30 $\mu$m, die ebene Formgebungsfläche dieses Agglomerats sowie die ebene Formgebungsfläche eines weiteren Agglomerats.

Beispiel 1 b):

Es werden in einem Doppelschneckenextruder (Leistritz ZSE18 max, Nürnberg, Deutschland) in der gravimetrischen Hauptdosierung als Polymer das Polyamid PA 6 (Schulamid® 6 NV 12, A. Schulman, Kerpen, Deutschland) und in einer gravimetrischen Seitendosierung Bornitrid-Hybrid-Flakes aus Beispiel 1 a) zudosiert. Es kommt die schonende Schneckenkonfiguration 2 zum Einsatz. Eine Schneckendrehzahl von 300 U/min wird eingestellt und ein Durchsatz von 6 kg/h gefahren, wobei bei der Hauptdosierung 3,05 kg/h PA 6 und bei der Seitendosierung 2,95 kg/h Bornitrid-Hybrid-Flakes aus der Siebfraktion < 500 $\mu$m dosiert werden. Das erhaltene Compound wird durch zwei 3 mm Düsen geleitet, durchläuft eine Kühlstrecke im Wasserbad und wird zu Granulat gehäckselt. Der Anteil an Bornitrid-Hybrid-Flakes im Compound beträgt 30 Vol.-%.

Beispiel 1 c):

Das Compoundgranulat aus Beispiel 1 b) wird in einer Spritzgussmaschine (Krauss Maffei KM80-220C2 mit einem Schneckendurchmesser von 30mm) zu 2 mm dünnen Platten mit den Maßen 80x80x2 mm$^3$ spritzgegossen. Die Schneckendrehzahl beim Plastifizieren beträgt 80 U/min. Die Einspritzgeschwindigkeit beim Spritzgießen beträgt 15 cm$^3$/s, der Einspritzdruck 780 bar, der Nachdruck 260 bar, die Werkzeugtemperatur des Spritzgusswerkzeugs 90 °C und die Massetemperatur der Compoundschmelze 250 °C.

Die Wärmeleitfähigkeit wird an scheibenförmigen spritzgegossenen Proben einer Stärke von 2 mm gemessen, wobei die Probe für die Messung der Through-plane-Wärmeleitfähigkeit aus der Mitte einer spritzgegossenen Platte der Stärke von 2 mm (Abmessungen 2x80x80 mm$^3$) mit den Abmessungen 2x10x10 mm$^3$ präpariert wird. Die Dicke der Probe für die Wärmeleitfähigkeitsmessung entspricht der Plattendicke aus dem Spritzguss. Für die Messung der In-plane-Wärmeleitfähigkeit wird ein Plattenstapel von spritzgegossenen 2 mm dünnen Platten mit Sekundenkleber verklebt und aus dem so präparierten Plattenstapel wird parallel zur Through-plane-Richtung und senkrecht zur Fließrichtung der spritzgegossenen Proben eine 2 mm dünne Platte mit den Maßen 2x10x10 mm$^3$ präpariert. An dieser Probe wird die In-plane-Wärmeleitfähigkeit ermittelt.

Zur Messung der Wärmeleitfähigkeit wird die Laser-Flash-Methode angewandt und mit dem Nanoflash LFA 447 (Netzsch, Selb, Deutschland) nach DIN EN ISO 22007-4 durchgeführt. Die Messung erfolgt bei 22 °C.

Die Bestimmung der Wärmeleitfähigkeit (WLF) erfolgt dabei durch Messung der Größen Temperaturleitfähigkeit a, spezifische Wärmekapazität $c_p$ und Dichte D und wird aus diesen Größen berechnet nach der Gleichung

$$WLF = a * c_p * D.$$

Die Messung von a und $c_p$ wird mit dem Nanoflash LFA 447 (Netzsch, Selb, Deutschland) an den wie oben beschrieben hergestellten Proben der Größe 10x10x2 mm$^3$ durchgeführt. Die Dichte wird durch Wägung und Bestimmung der geometrischen Abmessungen der exakt geformten Proben ermittelt. Für die Messung wird der Standard Pyroceram 9606 verwendet.

Die Ergebnisse der Wärmeleitfähigkeitsmessungen und die Spritzgussparameter sind in Tabelle 1 aufgeführt.

Die an einer spritzgegossenen dünnen Platte der Abmessungen 80x80x2 mm$^3$ ermittelte Wärmeleitfähigkeit für das ungefüllte Polymer PA 6 (Schulamid® 6 NV 12) beträgt 0,26 W/m*K.

Beispiel 2:

Die Herstellung der Bornitrid-Hybrid-Flakes und die Compoundierung erfolgen gemäß Beispiel 1. Der Spritzguss wird wie in Beispiel 1 beschrieben durchgeführt, jedoch mit einer Einspritzgeschwindigkeit von 55 cm$^3$/s. Der Einspritzdruck beträgt 700 bar, der Nachdruck 230 bar.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 3:

Die Herstellung der Bornitrid-Hybrid-Flakes und die Compoundierung erfolgen gemäß Beispiel 1. Der Spritzguss wird wie in Beispiel 1 beschrieben durchgeführt, jedoch mit einer Einspritzgeschwindigkeit von 90 cm$^3$/s. Der Einspritzdruck beträgt 765 bar, der Nachdruck 255 bar.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 4:

Die Herstellung der Bornitrid-Hybrid-Flakes und die Compoundierung erfolgen gemäß Beispiel 1. Der Spritzguss wird wie in Beispiel 1 beschrieben durchgeführt, jedoch mit einer Werkzeugtemperatur von 150 °C. Der Einspritzdruck beträgt 820 bar, der Nachdruck 260 bar.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 5:

Die Herstellung der Bornitrid-Hybrid-Flakes und die Compoundierung erfolgen gemäß Beispiel 1. Der Spritzguss wird wie in Beispiel 1 beschrieben durchgeführt, jedoch mit einer Einspritzgeschwindigkeit von 90 cm$^3$/s und einer Werkzeugtemperatur von 150 °C. Der Einspritzdruck beträgt 640 bar, der Nachdruck 255 bar.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 6:

Die Herstellung der Bornitrid-Hybrid-Flakes erfolgt gemäß Beispiel 1. Die Compoundierung erfolgt gemäß Beispiel 1, wobei 1,84 kg/h PA 6 über die Hauptdosierung und 4,16 kg/h der Bornitrid-Hybrid-Flakes aus der Siebfraktion < 500 $\mu$m über die Seitendosierung eingearbeitet werden. Der Spritzguss wird wie in Beispiel 1 beschrieben durchgeführt, jedoch mit einer Einspritzgeschwindigkeit von 55 cm$^3$/s und einer Werkzeugtemperatur von 150 °C. Der Einspritzdruck beträgt 1270 bar, der Nachdruck 425 bar.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 7:

Die Herstellung der Bornitrid-Hybrid-Flakes und die Compoundierung erfolgen gemäß Beispiel 6. Der Spritzguss wird wie in Beispiel 6 beschrieben durchgeführt, jedoch mit einer Einspritzgeschwindigkeit von 90 cm$^3$/s.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 8:

Die Herstellung der Bornitrid-Hybrid-Flakes und die Compoundierung erfolgen gemäß Beispiel 6. Der Spritzguss wird wie in Beispiel 6 beschrieben durchgeführt, jedoch mit einer Werkzeugtemperatur von 175 °C. Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 9:

Die Herstellung der Bornitrid-Hybrid-Flakes und die Compoundierung erfolgen gemäß Beispiel 6. Der Spritzguss wird wie in Beispiel 6 beschrieben durchgeführt, jedoch mit einer Einspritzgeschwindigkeit von 90 cm$^3$/s und einer Werkzeugtemperatur von 175 °C.
Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 10:

Die Herstellung der Bornitrid-Hybrid-Flakes und die Compoundierung erfolgen gemäß Beispiel 6. Der Spritzguss wird wie in Beispiel 6 beschrieben durchgeführt, jedoch mit einer Einspritzgeschwindigkeit von 15 cm$^3$/s, einer Werkzeugtemperatur von 175 °C und einer Massetemperatur von 265 °C. Der Einspritzdruck beträgt 1300 bar, der Nachdruck 425 bar.
Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 11:

Die Herstellung der Bornitrid-Hybrid-Flakes und die Compoundierung erfolgen gemäß Beispiel 6. Der Spritzguss wird wie in Beispiel 6 beschrieben durchgeführt, jedoch mit einer Werkzeugtemperatur von 175 °C und einer Massetemperatur von 265 °C. Der Einspritzdruck beträgt 1300 bar, der Nachdruck 425 bar.
Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 12:

Die Herstellung der Bornitrid-Hybrid-Flakes und die Compoundierung erfolgen gemäß Beispiel 6. Der Spritzguss wird wie in Beispiel 6 beschrieben durchgeführt, jedoch mit einer Einspritzgeschwindigkeit von 90 cm$^3$/s, einer Werkzeugtemperatur von 175 °C und einer Massetemperatur von 265 °C. Der Einspritzdruck beträgt 1290 bar, der Nachdruck 425 bar.
Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 13:

In einem Doppelschneckenextruder (Leistritz ZSE18 max, Nürnberg, Deutschland) werden in der gravimetrischen Hauptdosierung als Polymer das Polyamid PA 6 (Schulamid® 6 NV 12, A. Schulman, Kerpen, Deutschland) und in einer gravimetrischen Seitendosierung Bornitrid-Hybrid-Flakes aus Beispiel 1 a) zudosiert. Es kommt die schonende Schneckenkonfiguration 2 zum Einsatz. Eine Schneckendrehzahl von 300 U/min wird eingestellt und ein Durchsatz von 6 kg/h gefahren, wobei bei der Hauptdosierung 1,84 kg/h PA 6 und bei der Seitendosierung 4,16 kg/h Bornitrid-Hybrid-Flakes aus der Siebfraktion < 500 μm dosiert werden. Der Anteil an Bornitrid-Hybrid-Flakes in dem so hergestellten PA 6-Compound beträgt 50 Vol.-%. Es wird ein zweites PA 6-Compound mit 50 Vol.-% Alumosilikat hergestellt. Dazu werden im Doppelschneckenextruder bei der Hauptdosierung 1,44 kg/h PA6 und bei der Seitendosierung 4,56 kg/h Alumosilikat Trefil 1360-400 (Quarzwerke, Frechen, Deutschland) mit einer mittleren Partikelgröße $d_{50}$ von 6,3 μm dosiert. Das Alumosilikat hat eine Dichte von 3,6 g/cm$^3$, die Wärmeleitfähigkeit beträgt 14 W/m*K. Röntgenografisch ist die Hauptphase des Alumosilikats Kyanit ($Al_2SiO_5$).
Die erhaltenen Compounds werden jeweils durch zwei 3 mm Düsen geleitet, durchlaufen eine Kühlstrecke im Wasserbad und werden jeweils einzeln zu Compoundgranulaten gehäckselt.
Die erhaltenen Compoundgranulate mit Bornitrid-Hybrid-Flakes und mit Alumosilikat werden so gemischt, dass im Compoundgranulatgemisch 10 Vol.-% Bornitrid-Hybrid-Flakes und 40 Vol.-% Alumosilikat vorliegen. Das Mischungsverhältnis entspricht 16 Gew.-% Compoundgranulat mit Bornitrid-Hybrid-Flakes und 84 Gew.-% Compoundgranulat mit Alumosilikat. Das Compoundgranulatgemisch wird anschließend in einer Spritzgießmaschine (Kraus Maffei, KM80-220C2) zu 2 mm dünnen Platten mit den Maßen 80x80x2 mm$^3$ spritzgegossen. Die Einspritzgeschwindigkeit beträgt 90 cm$^3$/s, die Werkzeugtemperatur beträgt 80 °C und die Massetemperatur 250 °C. Der Einspritzdruck beträgt 1800 bar, der Nachdruck 1000 bar.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 14:

Die Herstellung der Bornitrid-Hybrid-Flakes, die Compoundierung und der Spritzguss erfolgen gemäß Beispiel 13, wobei das Compoundgranulatgemisch aus den jeweiligen Einzelcompounds so gemischt wird, dass ein Anteil von 20 Vol.-% Bornitrid-Hybrid-Flakes und 30 Vol.-% Alumosilikat im PA6-Compound erhalten werden. Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 15:

Die Herstellung der Bornitrid-Hybrid-Flakes und die Compoundierung erfolgen gemäß Beispiel 13, wobei das Compoundgranulatgemisch aus den jeweiligen Einzelcompounds so gemischt wird, dass 30 Vol.-% Bornitrid-Hybrid-Flakes und 20 Vol.-% Alumosilikat erhalten werden. Der Spritzguss erfolgt gemäß Beispiel 13, jedoch beträgt die Einspritzgeschwindigkeit 55 cm$^3$/s und die Werkzeugtemperatur 175°C. Der Einspritzdruck beträgt 1300 bar, der Nachdruck 425 bar. Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 16:

Die Herstellung der Bornitrid-Hybrid-Flakes und die Compoundierung erfolgen gemäß Beispiel 13, wobei das Compoundgranulatgemisch aus den jeweiligen Einzelcompounds so gemischt wird, dass 40 Vol.-% Bornitrid-Hybrid-Flakes und 10 Vol.-% Alumosilikat erhalten werden. Der Spritzuguss erfolgt gemäß Beispiel 13, jedoch beträgt die Einspritzgeschwindigkeit 55 cm$^3$/s und die Werkzeugtemperatur von 175°C. Der Einspritzdruck liegt bei 1300 bar, der Nachdruck bei 425 bar. Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Beispiel 17:

In einem Doppelschneckenextruder (Leistritz ZSE18 max, Nürnberg, Deutschland) werden in der gravimetrischen Hauptdosierung als Polymer das Polyamid PA 6 (Schulamid® 6 NV 12, A. Schulman, Kerpen, Deutschland) und in einer gravimetrischen Seitendosierung Bornitrid-Hybrid-Flakes aus Beispiel 1 a) zudosiert. Es kommt die schonende Schneckenkonfiguration 2 zum Einsatz. Eine Schneckendrehzahl von 300 U/min wird eingestellt und ein Durchsatz von 6 kg/h gefahren, wobei bei der Hauptdosierung 1,84 kg/h PA 6 und bei der Seitendosierung 4,16 kg/h Bornitrid-Hybrid-Flakes aus der Siebfraktion < 500 μm dosiert werden. Der Anteil an Bornitrid-Hybrid-Flakes in dem so hergestellten PA 6-Compound beträgt 50 Vol.-%. Es wird ein zweites PA 6-Compound mit 50 Vol.-% Glasfasern hergestellt. Dazu werden im Doppelschneckenextruder bei der Hauptdosierung 2,05 kg/h PA6 und bei der Seitendosierung 3,95 kg/h Glasfasern dosiert. Die eingesetzten Glasfasern sind handelsübliche Glasfasern zur Faserverstärkung von thermoplastischen Polymeren mit einem Durchmesser von 14 μm und einer Faserlänge von 4,5 mm. Die Restfeuchte beträgt < 0,1%. Die Glasfasern sind silanisiert mit 0,65 Gew.-% Silangehalt.

Die erhaltenen Compounds werden jeweils durch zwei 3 mm Düsen geleitet, durchlaufen eine Kühlstrecke im Wasserbad und werden jeweils einzeln zu Compoundgranulaten gehäckselt.

Die erhaltenen Compoundgranulate mit Bornitrid-Hybrid-Flakes und mit Glasfasern werden so gemischt, dass im Compoundgranulatgemisch 20 Vol.-% Bornitrid-Hybrid-Flakes und 30 Vol.-% Glasfasern vorliegen. Das Mischungsverhältniss entspricht 43 Gew.-% Compoundgranulat mit Bornitrid-Hybrid-Flakes und 57 Gew.-% Compoundgranulat mit Glasfasern. Das Compoundgranulatgemisch wird anschließend in einer Spritzgießmaschine (Kraus Maffei, KM80-220C2) zu 2 mm dünnen Platten mit den Maßen 80x80x2 mm$^3$ spritzgegossen. Die Einspritzgeschwindigkeit beträgt 90 cm$^3$/s, die Werkzeugtemperatur beträgt 175 °C und die Massetemperatur 265 °C. Die Schneckendrehzahl beim Plastifizieren beträgt 80 U/min, der Einspritzdruck beträgt 1300 bar und der Nachdruck 425 bar. Die 2 mm dünnen Platten werden zur Messung der Wärmeleitfähigkeit verwendet.

Für die Messung der Zugfestigkeit werden Zugstäbe (Gesamt-Probenbreite 20 mm, Versuchsbreite 10 mm, Gesamt-Probenlänge 170 mm, Versuchslänge 80 mm, Probendicke 4 mm) spritzgegossen. Dabei beträgt die Einspritzgeschwindigkeit 90 cm$^3$/s, die Werkzeugtemperatur 175°C und die Massetemperatur 265°C. Die Schneckendrehzahl der Plastifiziereinheit beträgt 80 U/min, der Einspritzdruck 1300 bar und der Nachdruck 425 bar. Die Bestimmung der Zugfestigkeit wird gemäß DIN EN ISO 527 durchgeführt.

Die Wärmeleitfähigkeitsmessungen erfolgen wie in Beispiel 1 beschrieben. Die Spritzgussparameter und die Ergebnisse der Wärmeleitfähigkeitsmessungen sowie die Zugfestigkeit sind in Tabelle 1 aufgeführt.

Beispiel 18:

Die Herstellung der Bornitrid-Hybrid-Flakes, die Compoundierung und der Spritzguss erfolgen gemäß Beispiel 17, wobei das Compoundgranulatgemisch aus den jeweiligen Einzelcompounds so gemischt wird, dass 30 Vol.-% Bornitrid-Hybrid-Flakes und 20 Vol.-% Glasfasern erhalten werden. Die Wärmeleitfähigkeitsmessungen erfolgen wie in Beispiel 1 beschrieben. Die Spritzgussparameter und die Ergebnisse der Wärmeleitfähigkeitsmessungen sowie die Zugfestigkeit sind in Tabelle 1 aufgeführt.

Beispiel 19:

Die Herstellung der Bornitrid-Hybrid-Flakes, die Compoundierung und der Spritzguss erfolgen gemäß Beispiel 17, wobei das Compoundgranulatgemisch aus den jeweiligen Einzelcompounds so gemischt wird, dass 40 Vol.-% Bornitrid-Hybrid-Flakes und 10 Vol.-% Glasfasern erhalten werden. Die Wärmeleitfähigkeitsmessungen erfolgen wie in Beispiel 1 beschrieben. Die Spritzgussparameter und die Ergebnisse der Wärmeleitfähigkeitsmessungen sowie die Zugfestigkeit sind in Tabelle 1 aufgeführt.

Beispiel 20:

In einem Doppelschneckenextruder (Leistritz ZSE18 max, Nürnberg, Deutschland) werden in der gravimetrischen Hauptdosierung als Polymer das Polyamid PA 6 (Schulamid® 6 NV 12, A. Schulman, Kerpen, Deutschland) und in einer gravimetrischen Seitendosierung Bornitrid-Hybrid-Flakes aus Beispiel 1 a) zudosiert. Es kommt die schonende Schneckenkonfiguration 2 zum Einsatz. Eine Schneckendrehzahl von 300 U/min wird eingestellt und ein Durchsatz von 6 kg/h gefahren, wobei bei der Hauptdosierung 1,84 kg/h PA 6 und bei der Seitendosierung 4,16 kg/h Bornitrid-Hybrid-Flakes aus der Siebfraktion < 500 μm dosiert werden. Der Anteil an Bornitrid-Hybrid-Flakes in dem so hergestellten PA 6-Compound beträgt 50 Vol.-%. Es wird ein zweites PA 6-Compound mit 50 Vol.-% Glasfasern hergestellt. Dazu werden im Doppelschneckenextruder bei der Hauptdosierung 2,05 kg/h PA 6 und bei der Seitendosierung 3,95 kg/h Glasfasern dosiert. Es werden handelsübliche Glasfasern wie in Beispiel 17 eingesetzt. Ein drittes PA 6-Compound wird mit 50 Vol.-% Alumosilikat hergestellt. Dazu werden im Doppelschneckenextruder bei der Hauptdosierung 1,44 kg/h PA 6 und bei der Seitendosierung 4,56 kg/h Alumosilikat (aus Beispiel 17) dosiert.

Die erhaltenen Compounds werden jeweils durch zwei 3 mm Düsen geleitet, durchläuft eine Kühlstrecke im Wasserbad und werden jeweils einzeln zu Compoundgranulaten gehäckselt.

Die erhaltenen Compoundgranulate werden so gemischt, dass im Compoundgranulatgemisch 20 Vol.-% Bornitrid-Hybrid-Flakes, 15 Vol.-% Glasfasern und 15 Vol.-% Alumosilikat vorliegen. Das Mischungsverhältniss entspricht 38 Gew.-% Compoundgranulat mit Bornitrid-Hybrid-Flakes, 36 Gew.-% Compoundgranulat mit Alumosilikat und 26 Gew.-% Compoundgranulat mit Glasfasern. Das Compoundgranulatgemisch wird anschließend in einer Spritzgussmaschine (Kraus Maffei, KM80-220C2) zu 2 mm dünnen Platten mit den Maßen 80x80x2 mm$^3$ spritzgegossen. Die Einspritzgeschwindigkeit beträgt 90 cm$^3$/s, die Werkzeugtemperatur beträgt 175 °C und die Massetemperatur 265 °C. Die Schneckendrehzahl beim Plastifizieren beträgt 80 U/min, der Einspritzdruck beträgt 1100 bar und der Nachdruck 425 bar. Die 2 mm dünnen Platten werden zur Messung der Wärmeleitfähigkeit verwendet.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Referenzbeispiel 1:

In einem Doppelschneckenextruder (Leistritz ZSE18 max, Nürnberg, Deutschland) werden in der gravimetrischen Hauptdosierung als Polymer das Polyamid PA 6 (Schulamid® 6 NV 12, A. Schulman, Kerpen, Deutschland) und in einer gravimetrischen Seitendosierung Bornitrid-Hybrid-Flakes aus Beispiel 1 a) zudosiert. Es kommt die schroffe Schneckenkonfiguration 1 zum Einsatz. Eine Schneckendrehzahl von 300 U/min wird eingestellt und ein Durchsatz von 6 kg/h gefahren, wobei bei der Hauptdosierung 3,05 kg/h PA 6 und bei der Seitendosierung 2,95 kg/h Bornitrid-Hybrid-Flakes aus der Siebfraktion < 500 μm dosiert werden. Das erhaltene Compound wird durch zwei 3 mm Düsen geleitet, durchläuft eine Kühlstrecke im Wasserbad und wird zu Granulat gehäckselt. Der Anteil an Bornitrid-Hybrid-Flakes im Compound beträgt 30 Vol.-%.

Das erhaltene Compoundgranulat wird in einer Spritzgussmaschine (Engel e-motion) zu 2 mm dünnen Platten mit den Maßen 80x80x2 mm$^3$ spritzgegossen. Die Einspritzgeschwindigkeit beträgt 200 cm$^3$/s, die Werkzeugtemperatur 90 °C und die Massetemperatur 275 °C.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Referenzbeispiel 2

Die Compoundierung erfolgt gemäß Referenzbeispiel 1, wobei 1,84 kg/h PA 6 über die Hauptdosierung und 4,16 kg/h Bornitrid-Hybrid-Flakes über die Seitendosierung eingearbeitet werden. Es werden Bornitrid-Hybrid-Flakes gemäß Beispiel 1 eingesetzt. Der Spritzguss erfolgt gemäß Referenzbeispiel 1.

Die Wärmeleitfähigkeitsmessungen erfolgen wie in Beispiel 1 beschrieben. Die Spritzgussparameter und die Ergebnisse der Wärmeleitfähigkeitsmessungen sind in Tabelle 1 aufgeführt.

Referenzbeispiel 3

Die Herstellung der Bornitrid-Hybrid-Flakes und die Compoundierung erfolgen gemäß Beispiel 17. Der Spritzguss erfolgt gemäß Beispiel 17, jedoch beträgt die Einspritzgeschwindigkeit 30 cm$^3$/s, die Werkzeugtemperatur 80 °C und die Massetemperatur 250 °C. Der Einspritzdruck beträgt 820 bar und der Nachdruck 500 bar. Die Wärmeleitfähigkeitsmessungen erfolgen wie in Beispiel 1 beschrieben. Die Spritzgussparameter und die Ergebnisse der Wärmeleitfähigkeitsmessungen sowie die Zugfestigkeit sind in Tabelle 1 aufgeführt.

Referenzbeispiel 4:

Die Herstellung der Bornitrid-Hybrid-Flakes und die Compoundierung erfolgen gemäß Beispiel 18. Der Spritzguss erfolgt gemäß Beispiel 18, jedoch beträgt die Einspritzgeschwindigkeit 30 cm$^3$/s , die Werkzeugtemperatur 80 °C und die Massetemperatur 250 °C. Der Einspritzdruck beträgt 900 bar und der Nachdruck 480 bar. Die Wärmeleitfähigkeitsmessungen erfolgen wie in Beispiel 1 beschrieben. Die Spritzgussparameter und die Ergebnisse der Wärmeleitfähigkeitsmessungen sowie die Zugfestigkeit sind in Tabelle 1 aufgeführt.

Referenzbeispiel 5:

Die Herstellung der Bornitrid-Hybrid-Flakes und die Compoundierung erfolgen gemäß Beispiel 19. Der Spritzguss erfolgt gemäß Beispiel 19, jedoch beträgt die Einspritzgeschwindigkeit 30 cm$^3$/s, die Werkzeugtemperatur 80 °C und die Massetemperatur 250 °C. Der Einspritzdruck beträgt 1000 bar und der Nachdruck 410 bar. Die Wärmeleitfähigkeitsmessungen erfolgen wie in Beispiel 1 beschrieben. Die Spritzgussparameter und die Ergebnisse der Wärmeleitfähigkeitsmessungen sowie die Zugfestigkeit sind in Tabelle 1 aufgeführt.

Tabelle 1:

| Beispiel Nr. | Schuppenförmige Bornitrid-Agglomerate [vor.-%] | Alumosilikat [vor.-%] | Glasfaser [vor.-%] | Einspritzgeschwindigkeit [cm³/s] | Massetemperatur [°C] | Werkzeugtemperatur [°C] | Wärmeleitfähikeit through-plane [W/m*K] | Wärmeleitfähikeit in-plane [W/m*K] | Zugfestigkeit [Mpa] |
|---|---|---|---|---|---|---|---|---|---|
| 1 | 30 | 0 | 0 | 15 | 250 | 90 | 1,7 | 3,6 | n.b. |
| 2 | 30 | 0 | 0 | 55 | 250 | 90 | 1,5 | 3,7 | n.b. |
| 3 | 30 | 0 | 0 | 90 | 250 | 90 | 1,4 | 3,7 | n.b. |
| 4 | 30 | 0 | 0 | 15 | 250 | 150 | 1,5 | 3,7 | n.b. |
| 5 | 30 | 0 | 0 | 90 | 250 | 150 | 1,3 | 3,3 | n.b. |
| 6 | 50 | 0 | 0 | 55 | 250 | 150 | 4,0 | 5,2 | n.b. |
| 7 | 50 | 0 | 0 | 90 | 250 | 150 | 3,8 | 4,0 | n.b. |
| 8 | 50 | 0 | 0 | 55 | 250 | 175 | 4,1 | 5,0 | n.b. |
| 9 | 50 | 0 | 0 | 90 | 250 | 175 | 3,9 | 6,9 | n.b. |
| 10 | 50 | 0 | 0 | 20 | 265 | 175 | 3,7 | 6,0 | n.b. |
| 11 | 50 | 0 | 0 | 55 | 265 | 175 | 3,3 | 8,1 | n.b. |
| 12 | 50 | 0 | 0 | 90 | 265 | 175 | 3,0 | 7,8 | n.b. |
| 13 | 10 | 40 | 0 | 90 | 250 | 80 | 1,9 | 2,9 | n.b. |
| 14 | 20 | 30 | 0 | 90 | 250 | 80 | 2,3 | 3,9 | n.b. |
| 15 | 30 | 20 | 0 | 55 | 250 | 175 | 2,6 | 5,1 | n.b. |
| 16 | 40 | 10 | 0 | 55 | 250 | 175 | 2,8 | 5,8 | n.b. |
| 17 | 20 | 0 | 30 | 90 | 265 | 175 | 1,3 | 1,8 | 123 |
| 18 | 30 | 0 | 20 | 90 | 265 | 175 | 1,8 | 3,1 | 89 |
| 19 | 40 | 0 | 10 | 90 | 265 | 175 | 2,4 | 5,5 | 63 |
| 20 | 20 | 15 | 15 | 90 | 265 | 175 | 1,8 | 3,5 | n.b. |

(fortgesetzt)

| Referenz-beispiel | Schuppenför-mige Bornitrid-Agglomerate | Alumosilikat | Glasfaser | Einspritz-ge-schwind-igkeit | Massetemper-atur | Werkzeugtemper-atur | Wärmeleit-fähikeit through-plane | Wärmeleit-fähikeit in-plane | Zugfestigkeit |
|---|---|---|---|---|---|---|---|---|---|
| Nr. | [vor.-%] | [vor.-%] | [vor.-%] | [cm$^3$/s] | [°C] | [°C] | [W/m*K] | [W/m*K] | [Mpa] |
| 1 | 30 | 0 | 0 | 200 | 275 | 90 | 1,2 | 2,9 | n.b. |
| 2 | 50 | 0 | 0 | 200 | 275 | 90 | 2,6 | 4,9 | n.b. |
| 3 | 20 | 0 | 30 | 30 | 250 | 80 | n.b. | n.b. | 113 |
| 4 | 30 | 0 | 20 | 30 | 250 | 80 | n.b. | n.b. | 79 |
| 5 | 40 | 0 | 10 | 30 | 250 | 80 | n.b. | n.b. | 55 |
| *) n.b.: nicht bestimmt | | | | | | | | | |

**EP 3 254 821 A2**

**Patentansprüche**

**1.** Verfahren zur Herstellung eines Bauteils mit einer Wandstärke von höchstens 3 mm an zumindest einem Teil des Bauteils, umfassend den Verfahrensschritt des Spritzgießens mittels eines Spritzgusswerkzeugs in einer Spritzgussmaschine unter Verwendung eines Polymer-Bornitrid-Compounds, wobei das Polymer-Bornitrid-Compound einen thermoplastisch verarbeitbaren Polymerwerkstoff und einen wärmeleitenden Füllstoff umfasst, wobei der Füllstoff plättchenförmige hexagonale Bornitrid-Partikel umfasst, und wobei die Einspritzgeschwindigkeit beim Spritzgießen höchstens 160 cm$^3$/s beträgt.

**2.** Herstellverfahren gemäß Anspruch 1, wobei die Einspritzgeschwindigkeit < 135 cm$^3$/s, vorzugsweise ≤ 115 cm$^3$/s beträgt.

**3.** Herstellverfahren gemäß Anspruch 2, wobei die Einspritzgeschwindigkeit ≤ 100 cm$^3$/s, vorzugsweise ≤ 75 cm$^3$/s, weiter vorzugsweise ≤60 cm$^3$/s und insbesondere vorzugsweise ≤ 55 cm$^3$/s beträgt.

**4.** Herstellverfahren gemäß einem der Ansprüche 1 bis 3, wobei das Polymer-Bornitrid-Compound keine Glasfasern enthält,
und wobei die Massetemperatur der Compoundschmelze in der Spritzgussmaschine wenigstens 10 °C und höchstens 60 °C höher ist als die Schmelztemperatur des Polymerwerkstoffs ohne wärmeleitenden Füllstoff,
und wobei die Werkzeugtemperatur des Spritzgusswerkzeugs mindestens 30 °C
und höchstens 120 °C niedriger ist als die bei 0,45 MPa gemäß DIN EN ISO 75-1/- 2 gemessene Formbeständigkeitstemperatur des Polymerwerkstoffs ohne wärmeleitenden Füllstoff,
und wobei die Through-plane-Wärmeleitfähigkeit des Bauteils wenigstens 1 W/m*K und weniger als 2,5 W/m*K beträgt, und wobei die Wärmeleitfähigkeit gemäß DIN EN ISO 22007-4 an scheibenförmigen spritzgegossenen Proben einer Dicke von 2 mm gemessen wird.

**5.** Herstellverfahren gemäß Anspruch 4, wobei die Massetemperatur der Compoundschmelze in der Spritzgussmaschine wenigstens 20 °C und höchstens 50 °C, vorzugsweise wenigstens 30 °C und höchstens 40 °C höher ist als die Schmelztemperatur des Polymerwerkstoffs ohne wärmeleitenden Füllstoff und/oder wobei die Werkzeugtemperatur des Spritzgusswerkzeugs mindestens 60 °C und höchstens 100 °C, bevorzugt mindestens 90 °C und höchstens 100 °C niedriger ist als die bei 0,45 MPa gemäß DIN EN ISO 75-1/-2 gemessene Formbeständigkeitstemperatur des Polymerwerkstoffs ohne wärmeleitenden Füllstoff.

**6.** Herstellverfahren gemäß einem der Ansprüche 1 bis 3, wobei das Polymer-Bornitrid-Compound keine Glasfasern enthält,
und wobei die Massetemperatur der Compoundschmelze in der Spritzgussmaschine wenigstens 10 °C und höchstens 60 °C höher ist als die Schmelztemperatur des Polymerwerkstoffs ohne wärmeleitenden Füllstoff,
und wobei die Werkzeugtemperatur des Spritzgusswerkzeugs mindestens 5 °C und höchstens 70 °C niedriger ist als die bei 0,45 MPa gemäß DIN EN ISO 75-1/-2 gemessene Formbeständigkeitstemperatur des Polymerwerkstoffs ohne wärmeleitenden Füllstoff,
und wobei die Through-plane-Wärmeleitfähigkeit des Bauteils wenigstens 2,5 W/m*K beträgt, und wobei die Wärmeleitfähigkeit gemäß DIN EN ISO 22007-4 an scheibenförmigen spritzgegossenen Proben einer Dicke von 2 mm gemessen wird.

**7.** Herstellverfahren gemäß Anspruch 6, wobei die Massetemperatur der Compoundschmelze in der Spritzgussmaschine wenigstens 20 °C und höchstens 50 °C, bevorzugt wenigstens 20 °C und höchstens 40 °C, insbesondere bevorzugt wenigstens 20 °C und höchstens 35 °C höher ist als die Schmelztemperatur des Polymerwerkstoffs ohne wärmeleitenden Füllstoff und/oder wobei die Werkzeugtemperatur des Spritzgusswerkzeugs mindestens 10 °C und höchstens 50 °C, bevorzugt mindestens 10 °C und höchstens 40 °C niedriger ist als die bei 0,45 MPa gemäß DIN EN ISO 75-1/-2 gemessene Formbeständigkeitstemperatur des Polymerwerkstoffs ohne wärmeleitenden Füllstoff.

**8.** Herstellverfahren gemäß Anspruch 1 oder 2, wobei das Polymer-Bornitrid-Compound Glasfasern enthält,
und wobei die Einspritzgeschwindigkeit beim Spritzgießen wenigstens 35 cm$^3$/s, vorzugsweise wenigstens 55 cm$^3$/s beträgt,
und wobei die Massetemperatur der Compoundschmelze in der Spritzgussmaschine wenigstens 10 °C und höchstens 60 °C höher ist als die Schmelztemperatur des Polymerwerkstoffs ohne wärmeleitenden Füllstoff,
und wobei die Werkzeugtemperatur des Spritzgusswerkzeugs mindestens 5 °C und höchstens 40 °C niedriger ist als die bei 0,45 MPa gemäß DIN EN ISO 75-1/-2 gemessene Formbeständigkeitstemperatur des Polymerwerkstoffs ohne wärmeleitenden Füllstoff.

**9.** Herstellverfahren gemäß Anspruch 8, wobei die Massetemperatur der Compoundschmelze in der Spritzgussmaschine wenigstens 20 °C und höchstens 55 °C, bevorzugt wenigstens 30 °C und höchstens 55 °C höher ist als die Schmelztemperatur des Polymerwerkstoffs ohne wärmeleitenden Füllstoff und/oder wobei die Werkzeugtemperatur des Spritzgusswerkzeugs mindestens 10 °C und höchstens 30 °C, bevorzugt mindestens 10 °C und höchstens 25 °C niedriger ist als die bei 0,45 MPa gemäß DIN EN ISO 75-1/-2 gemessene Formbeständigkeitstemperatur des Polymerwerkstoffs ohne wärmeleitenden Füllstoff.

**10.** Bauteil mit einer Wandstärke von höchstens 3 mm an zumindest einem Teil des Bauteils, erhältlich durch ein Verfahren gemäß einem der Ansprüche 1 bis 9.

**11.** Bauteil mit einer Wandstärke von höchstens 3 mm an zumindest einem Teil des Bauteils, wobei das Bauteil durch thermoplastische Verarbeitung eines Polymer-Bornitrid-Compounds hergestellt wird, und wobei das Polymer-Bornitrid-Compound einen thermoplastisch verarbeitbaren Polymerwerkstoff und einen wärmeleitenden Füllstoff umfasst, und wobei der Füllstoff plättchenförmige hexagonale Bornitrid-Partikel umfasst.

**12.** Bauteil gemäß Anspruch 11, umfassend plättchenförmige hexagonalen Bornitrid-Partikel, welche miteinander zu schuppenförmig ausgebildeten Bornitrid-Agglomeraten agglomeriert sind.

**13.** Bauteil gemäß Anspruch 12, wobei der Texturindex der schuppenförmigen Bornitrid-Agglomerate größer als 2,0 ist und vorzugsweise 2,5 und mehr, weiter vorzugsweise 3,0 und mehr, besonders bevorzugt 3,5 und mehr beträgt; und/oder wobei die Dicke der schuppenförmigen Bornitrid-Agglomerate $\leq 500\ \mu$m, bevorzugt $\leq 200\ \mu$m, weiter bevorzugt $\leq 100\ \mu$m, weiter bevorzugt $\leq 70\ \mu$m, weiter bevorzugt $\leq 50\ \mu$m und insbesondere bevorzugt $\leq 35\ \mu$m beträgt; und/oder wobei das Aspektverhältnis der schuppenförmigen Bornitrid-Agglomerate größer als 1 ist und vorzugsweise 2 und mehr, weiter vorzugsweise 3 und mehr und besonders bevorzugt 5 und mehr beträgt.

**14.** Bauteil gemäß einem der Ansprüche 12 oder 13, wobei die schuppenförmigen Bornitrid-Agglomerate eine anorganische Bindephase umfassen.

**15.** Bauteil gemäß Anspruch 14, wobei die schuppenförmigen Bornitrid-Agglomerate einen Bindephasen-Anteil von wenigstens 1%, vorzugsweise von wenigstens 5%, weiter vorzugsweise von wenigstens 10%, weiter vorzugsweise von wenigstens 20% und insbesondere vorzugsweise von wenigstens 30% aufweisen, jeweils bezogen auf die Gesamtmenge der schuppenförmigen Bornitrid-Agglomerate.

**16.** Bauteil gemäß Anspruch 14 oder 15, wobei die Bindephase Aluminiumnitrid (AlN), Aluminiumoxinitrid, Titannitrid (TiN), Siliziumnitrid ($Si_3N_4$) oder/und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid und insbesondere bevorzugt Aluminiumnitrid enthält.

**17.** Bauteil gemäß einem der Ansprüche 11 bis 16, wobei die Through-plane-Wärmeleitfähigkeit des Bauteils wenigstens 1 W/m*K beträgt, vorzugsweise wenigstens 1,2 W/m*K, weiter vorzugsweise wenigstens 1,5 W/m*K und insbesondere bevorzugt wenigstens 1,8 W/m*K, wobei die Wärmeleitfähigkeit gemäß DIN EN ISO 22007-4 an scheibenförmigen spritzgegossenen Proben einer Dicke von 2 mm gemessen wird.

**18.** Bauteil gemäß einem der Ansprüche 11 bis 17, wobei die In-plane-Wärmeleitfähigkeit des Bauteils wenigstens 1,5 W/m*K beträgt, vorzugsweise wenigstens 1,8 W/m*K, weiter vorzugsweise wenigstens 2,2 W/m*K und insbesondere bevorzugt wenigstens 2,7 W/m*K, wobei die Wärmeleitfähigkeit gemäß DIN EN ISO 22007-4 an scheibenförmigen spritzgegossenen Proben einer Dicke von 2 mm gemessen wird.

**19.** Bauteil gemäß einem der Ansprüche 11 bis 18, wobei der Anteil an Bornitrid wenigstens 5 Vol.-%, vorzugsweise wenigstens 10 Vol.-%, weiter vorzugsweise wenigstens 20 Vol.-% und besonders bevorzugt wenigstens 30 Vol.-% beträgt, bezogen auf das Gesamtvolumen des Polymer-Bornitrid-Compounds.

**20.** Bauteil gemäß einem der Ansprüche 11 bis 19, umfassend wenigstens einen von Bornitrid verschiedenen, die Wärmeleitfähigkeit erhöhenden Füllstoff.

**21.** Bauteil gemäß Anspruch 20 wobei der von Bornitrid verschiedene Füllstoff ein Metallpulver ist, vorzugsweise gewählt aus der Gruppe umfassend Aluminium-, Silizium-, Titan-, Kupfer-, Eisen- und Bronzepulver, und Mischungen davon; oder wobei der von Bornitrid verschiedene Füllstoff Kohlenstoff in Form von Graphit, expandiertem Graphit, Graphen oder Ruß ist, wobei expandierter Graphit besonders bevorzugt ist; oder wobei der von Bornitrid verschiedene Füllstoff ein Oxid, Nitrid oder Carbid ist, vorzugsweise ausgewählt aus der Gruppe umfassend Aluminiumoxid, Magnesiumoxid, Aluminiumnitrid, Siliziumdioxid, Siliziumcarbid, Siliziumnitrid und Mischungen davon, besonders bevorzugt Aluminiumoxid, Magnesiumoxid und/oder Aluminiumnitrid; oder wobei der von Bornitrid verschiedene Füllstoff ein mineralischer Füllstoff ist und vorzugsweise ausgewählt ist aus der Gruppe umfassend Alumosilikate, Aluminiumsilikate, Magnesiumsilikat ($2MgO*SiO_2$), Magnesiumaluminat ($MgO*Al_2O_3$), Brucit (Magnesiumhydroxid, $Mg(OH)_2$), Quarz, Cristobalit und Mischungen davon.

22. Bauteil gemäß Anspruch 20 oder 21, wobei der Gesamtanteil an Bornitrid und den von Bornitrid verschiedenen wärmeleitenden Füllstoffen wenigstens 20 Vol.-% beträgt, vorzugsweise wenigstens 30 Vol.-%, jeweils bezogen auf das Gesamtvolumen des Polymer-Bornitrid-Compounds.

21. Bauteil gemäß einem der Ansprüche 11 bis 22, umfassend Glasfasern, wobei der Anteil an Glasfasern vorzugsweise 5 - 40 Vol.-% beträgt.

24. Bauteil gemäß einem der Ansprüche 11 bis 23, wobei die Wandstärke des Bauteils an zumindest einem Teil des Bauteils höchstens 2 mm beträgt.

25. Polymer-Bornitrid-Compound zur Herstellung eines Bauteils gemäß einem der Ansprüche 10 bis 24, wobei das Polymer-Bornitrid-Compound einen thermoplastisch verarbeitbaren Polymerwerkstoff und einen wärmeleitenden Füllstoff umfasst, wobei der Füllstoff plättchenförmige hexagonale Bornitrid-Partikel umfasst.

26. Verwendung eines Bauteils nach einem der Ansprüche 10 bis 24 zur Wärmeabfuhr von zu kühlenden Komponenten oder Baugruppen, vorzugsweise von elektronischen Komponenten oder Baugruppen.

Figur 1:

Figur 2a:

Figur 2b:

Figur 3a:

Figur 3b:

Figur 4:

Hauptfließrichtung

b

a

Figur 5:

Hauptfließrichtung

b

a

Figur 6 a:

1000 µm

Figur 6 b:

1000 µm

Figur 7 a:

1000 µm

Figur 7 b:

1000 µm

Figur 8 a:

1000 µm

Figur 8 b:

1000 µm

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060127422 A1
- WO 03013845 A1
- US 6048511 A
- EP 0939066 A1
- US 20020006373 A1
- US 20040208812 A1

- WO 2005021428 A1
- US 5854 A
- US 155 A
- US 6096671 A
- DE 102010050900 A1